# EUROPEAN PATENT APPLICATION

(11) **EP 4 408 116 A1**
(43) Date of publication of application: **31.07.2024**
(21) Application number: 22882651.7
(22) Date of filing: 09.10.2022
(51) Int. Cl.: H04W 76/11, H04W 40/22

(54) **COMMUNICATION METHOD, DEVICE, AND SYSTEM**

(30) Priority: 21.10.2021 CN 202111229637
(71) Applicant: HUAWEI TECHNOLOGIES CO., LTD., Shenzhen Guangdong 518129 (CN)
(72) Inventor: PAN, Xiaodan, Shenzhen, Guangdong 518129 (CN); PENG, Wenjie, Shenzhen, Guangdong 518129 (CN); WANG, Rui, Shenzhen, Guangdong 518129 (CN); SHI, Yulong, Shenzhen, Guangdong 518129 (CN)
(74) Representative: Pfenning, Meinig & Partner mbB
(86) International application number: PCT/CN2022/124044
(87) International publication number: WO 2023/066041

(57) **Abstract**

Embodiments of this application provide a communication method and a network node thereof. The communication method may be applied to UE-to-network U2N relay communication. In the communication method, a first network node gNB-CU sends first information to a second network node gNB-DU, to trigger the second network node to allocate a local identity to a remote UE; and the first network node receives second information from the second network node, where the second information includes the local identity allocated by the second network node to the remote UE. Alternatively, a first network node sends first information to a second network node, where the first information includes a local identity allocated by the first network node to a remote UE. The first network node or the second network node communicates with the remote UE via a relay UE. According to the method, communication between the gNB-CU and the gNB-DU can support existing layer-2 U2N relay communication.

## Description

This application claims priority to Chinese Patent Application No. 202111229637.4, filed with the China National Intellectual Property Administration on October 21, 2021 and entitled "COMMUNICATION METHOD, APPARATUS, AND SYSTEM", which is incorporated herein by reference in its entirety.

### TECHNICAL FIELD

This application relates to the wireless communication field, and in particular, to a communication method and apparatus, a node, a computer-readable storage medium, and a radio access network device.

### BACKGROUND

A user equipment (user equipment, UE)-to-network relay (UE-to-Network relay, U2N Relay) technology is a method in which a relay UE (Relay UE) provides relay communication for a remote UE (Remote UE), and the remote UE accesses a radio access network device via the relay UE. The relay UE communicates with the remote UE through a PC5 interface, a wireless communication link between the relay UE and the remote UE is referred to as a sidelink (sidelink, SL), and the relay UE and the network device perform wireless communication through a Uu interface.

In a layer-2 (Layer-2, L2) U2N relay protocol stack architecture, a data packet of the remote UE is relayed below a packet data convergence protocol (Packet Data Convergence Protocol, PDCP) layer of the relay UE. That is, the relay UE maintains a relay radio link control (Radio Link Control, RLC) bearer, and the relay RLC bearer includes an RLC protocol layer, a media access control (Media Access Control, MAC) protocol layer, and a physical layer (Physical Layer, PHY). Between the remote UE and a base station gNB, there is a PDCP protocol layer, a service data adaptation protocol (Service Data Adaptation Protocol, SDAP) protocol layer, and a radio resource control (radio resource control, RRC) protocol layer that are for end-to-end communication, but there is no RLC layer, MAC layer, or PHY layer for the end-to-end communication. In addition, in the L2 U2N relay protocol architecture, an adaptation layer (Adaptation layer, ADAPT) is added between the RLC layer and the PDCP layer. A main function of the adaptation layer includes bearer multiplexing and demultiplexing, for example, supporting multiplexing of different bearers onto one bearer or splitting of one bearer into a plurality of different bearers.

In a next generation radio access network (Next Generation Radio Access Network, NG-RAN), a CU-DU separation architecture is used for the base station gNB. In other words, one base station gNB is logically divided into two parts: a central unit (Central Unit, CU) and a distributed unit (Distributed Unit, DU). The gNB-CU communicates with the gNB-DU through an F1 interface. However, an existing communication procedure through the F1 interface between the gNB-CU and the gNB-DU cannot support L2 U2N relay communication.

### SUMMARY

Embodiments of this application provide a communication method and apparatus, a network node, a computer-readable storage medium, and a radio access network device, to resolve a problem that an F 1 interface between a gNB-CU and a gNB-DU cannot support existing L2 U2N relay communication in a U2N relay scenario.

To achieve the foregoing objective, the following technical solutions are used in embodiments of this application.

According to a first aspect, a communication method is provided. An entity that performs the communication method may be a first network node, or may be a function module used in the first network node, a chip or a chip system in the first network node, or a network entity or a network device that implements a function of the first network node. The following provides descriptions by using an example in which an execution body is the first network node. The communication method may include: The first network node sends first information to a second network node, where the first information is for triggering the second network node to allocate a local identity to a remote terminal device; and the first network node receives second information from the second network node, where the second information includes the local identity allocated by the second network node to the remote terminal device. Alternatively, the first network node sends first information to a second network node, where the first information includes a local identity allocated by the first network node to a remote terminal device. The first network node or the second network node communicates with the remote terminal device via a relay terminal device. Based on the communication method, the first network node can allocate the local identity to the remote terminal device, and notify the second network node of the local identity. Alternatively, the first network node can indicate the second network node to allocate the local identity to the remote terminal device. In this way, communication between the first network node (a gNB-CU is used as an example) and the second network node (a gNB-DU is used as an example) can support existing layer-2 U2N relay communication.

With reference to the first aspect, in a possible implementation, the first network node receives third information sent by the second network node, where the third information includes identity information that is of the remote terminal device on a first interface and that is allocated by the second network node to the remote terminal device; or the third information includes identity information that is of the remote terminal device on a first interface and that is allocated by the second network node to the remote terminal device and identity information that is of the relay terminal device on the first interface and that is allocated by the second network node to the relay terminal device, where the first interface is a communication interface between the first network node and the second network node. For example, based on the foregoing process, the second network node (the gNB-DU is used as an example) allocates the identity information of the remote terminal device on the first interface to the terminal device, can enable the first network node (the gNB-CU is used as an example) to learn of the relay terminal device connected to the remote terminal device, and can successfully send configuration information needed for a relay service to the relay terminal device.

With reference to the first aspect, in a possible implementation, the following optional operation is further included:
an operation 1: the first network node sends fourth information to the second network node, where the fourth information includes data radio bearer identity DRB ID information of the remote terminal device and identity information of a first radio link control RLC bearer, and there is a correspondence between the DRB ID information of the remote terminal device and the identity information of the first RLC bearer; and the first network node receives fifth information sent by the second network node, where the fifth information includes configuration information that is of the first RLC bearer and that is generated by the second network node, where the first RLC bearer is a bearer between the remote terminal device and the relay terminal device, and there is a correspondence between the DRB ID information of the remote terminal device and the identity information of the first RLC bearer;
an operation 2: the first network node receives fifth information generated by the second network node, where the fifth information includes data radio bearer identity DRB ID information of the remote terminal device, identity information of a first RLC bearer, and configuration information of the first RLC bearer, the first RLC bearer is a bearer between the remote terminal device and the relay terminal device, and there is a correspondence between the DRB ID information of the remote terminal device and the identity information of the first RLC bearer;
an operation 3: the first network node sends fourth information to the second network node, where the fourth information includes data radio bearer identity DRB ID information of the remote terminal device, the local identity of the remote terminal device, and identity information of a second RLC bearer; and the first network node receives fifth information generated by the second network node, where the fifth information includes configuration information of the second RLC bearer, where the second RLC bearer is a bearer between the second network node and the relay terminal device, and there is a correspondence between the DRB ID information of the remote terminal device, the local identity of the remote terminal device, and the identity information of the second RLC bearer; or
an operation 4: the first network node receives fifth information generated by the second network node, where the fifth information includes at least one of the following: data radio bearer identity DRB ID information of the remote terminal device, the local identity of the remote terminal device, identity information of a second RLC bearer, and configuration information of the second RLC bearer, where the second RLC bearer is a bearer between the second network node and the relay terminal device, and there is a correspondence between the DRB ID information of the remote terminal device, the local identity of the remote terminal device, and the identity information of the second RLC bearer.

With reference to the first aspect, in a possible implementation, in the operation 2 or the operation 4, the method may further include: The first network node sends fourth information to the second network node, where the fourth information includes identity information of the remote device.

With reference to the first aspect, in a possible implementation, any one of the following is satisfied: The fourth information further includes identity information of an uplink transmission tunnel, and there is a correspondence between the identity information of the uplink transmission tunnel and at least one of the following: the DRB ID information of the remote terminal device, the local identity of the remote terminal device, the identity information of the remote terminal device, and the identity information of the second RLC bearer, where the uplink transmission tunnel is used by the first network node to receive data from the second network node on the first interface; and/or the fifth information further includes identity information of a downlink transmission tunnel, and there is a correspondence between the identity information of the downlink transmission tunnel and at least one of the following: the DRB ID information of the remote terminal device, the local identity of the remote terminal device, the identity information of the remote terminal device, and the identity information of the second RLC bearer, where the downlink transmission tunnel is used by the first network node to send data to the second network node on the first interface.

For example, based on the foregoing process, the second network node (the gNB-DU is used as an example) and the first network node (the gNB-CU is used as an example) can configure, for the remote terminal device, a bearer configuration of the remote terminal device and a bearer configuration of the relay terminal device that are needed, and enable the relay terminal device to provide the relay service for data transmission between the remote terminal device and the network node.

With reference to the first aspect, in a possible implementation, the first network node receives first indication information from the relay terminal device, where the first indication information includes the identity information of the remote terminal device; the first indication information is for requesting to allocate the local identity to the remote terminal device; and the local identity of the remote terminal device uniquely identifies the remote terminal device within a control range of the first network node, or the local identity of the remote terminal device uniquely identifies the remote terminal device within a control range of the relay terminal device.

With reference to the first aspect, in a possible implementation, the first information is a user equipment context modification request UE CONTEXT MODIFICATION REQUEST message of the relay terminal device, and the second information is a user equipment context modification response UE CONTEXT MODIFICATION RESPONSE message of the relay terminal device; the fourth information is a user equipment context setup request UE CONTEXT SETUP REQUEST message of the remote terminal device, and the fifth information is a user equipment context setup response UE CONTEXT SETUP RESPONSE message of the remote terminal device; or the third information is an initial uplink RRC message transfer Initial UL RRC Message Transfer message of the remote terminal device.

With reference to the first aspect, in a possible implementation, the first network node includes a radio resource control RRC protocol layer, a service data adaptation protocol SDAP protocol layer, and a packet data convergence protocol PDCP protocol layer; the second network node includes a radio link control RLC protocol layer, a media access control MAC protocol layer, and a physical PHY protocol layer; and the first network node and the second network node belong to a same base station gNB.

With reference to the first aspect, in a possible implementation, in a process in which the remote terminal device is switched from a third network node to the second network node, the second network node is a target node in the switch process, the third network node is a source node in the switch process, the first network node controls the second network node and the third network node, and any one of the following is satisfied: the first information is a user equipment context setup request UE CONTEXT SETUP REQUEST message of the remote terminal device, and the second information is a user equipment context setup response UE CONTEXT SETUP RESPONSE message of the remote terminal device; or the fourth information is a user equipment context setup request UE CONTEXT SETUP REQUEST message of the remote terminal device, and the fifth information is a user equipment context setup response UE CONTEXT SETUP RESPONSE message of the remote terminal device.

With reference to the first aspect, in a possible implementation, the third network node includes a radio link control RLC protocol layer, a media access control MAC protocol layer, and a physical PHY protocol layer, and the first network node, the second network node, and the third network node are included in one base station gNB.

With reference to the first aspect, in a possible implementation, in the operation 1 or the operation 2, the method may further include: The fourth information or the fifth information further includes a first identity, and the first identity indicates the relay terminal device corresponding to the first RLC bearer.

The first identity is an identity of the relay terminal, a serving cell identity of the relay terminal, an identity allocated by the first network node to the relay terminal, or an identity allocated by the second network node to the relay terminal.

According to a second aspect, a communication method is provided. An entity that performs the communication method may be a second network node, or may be a function module used in the second network node, a chip or a chip system in the second network node, or a network entity or a network device that implements a function of the second network node. The communication method may include: The second network node receives first information from a first network node, where the first information is for triggering the second network node to allocate a local identity to a remote terminal device; and the second network node sends second information to the first network node, where the second information includes the local identity allocated by the second network node to the remote terminal device. Alternatively, the second network node receives first information from a first network node, where the first information includes a local identity allocated by the first network node to a remote terminal device. The first network node or the second network node communicates with the remote terminal device via a relay terminal device. Based on the communication method, the first network node can allocate the local identity to the remote terminal device, and notify the second network node of the local identity. Alternatively, the first network node can indicate the second network node to allocate the local identity to the remote terminal device, and the second network node notifies the first network node of the allocated local identity of the remote terminal device. In this way, communication between the first network node (a gNB-CU is used as an example) and the second network node (a gNB-DU is used as an example) can support existing layer-2 U2N relay communication.

With reference to the second aspect, in a possible implementation, the second network node sends third information to the first network node, where the third information includes identity information that is of the remote terminal device on a first interface and that is allocated by the second network node to the remote terminal device; or the third information includes identity information that is of the remote terminal device on a first interface and that is allocated by the second network node to the remote terminal device and identity information that is of the relay terminal device on the first interface and that is allocated by the second network node to the relay terminal device, where the first interface is a communication interface between the second network node and the first network node.

With reference to the second aspect, in a possible implementation, the method may include any one of the following operations:
an optional operation 1: the second network node receives fourth information sent by the first network node, where the fourth information includes data radio bearer identity DRB ID information of the remote terminal device and identity information of a first radio link control RLC bearer, and there is a correspondence between the DRB ID information of the remote terminal device and the identity information of the first RLC bearer; and the second network node sends fifth information to the first network node, where the fifth information includes configuration information that is of the first RLC bearer and that is generated by the second network node, where the first RLC bearer is a bearer between the remote terminal device and the relay terminal device, and there is a correspondence between the DRB ID information of the remote terminal device and the identity information of the first RLC bearer;
an optional operation 2: the second network node sends fifth information to the first network node, where the fifth information includes data radio bearer identity DRB ID information of the remote terminal device, identity information of a first RLC bearer, and configuration information of the first RLC bearer, the first RLC bearer is a bearer between the remote terminal device and the relay terminal device, and there is a correspondence between the DRB ID information of the remote terminal device and the identity information of the first RLC bearer;
an optional operation 3: the second network node receives fourth information sent by the first network node, where the fourth information includes data radio bearer identity DRB ID information of the remote terminal device, the local identity of the remote terminal device, and identity information of a second RLC bearer; and the second network node sends fifth information to the first network node, where the fifth information includes configuration information of the second RLC bearer, where the second RLC bearer is a bearer between the second network node and the relay terminal device, and there is a correspondence between the DRB ID information of the remote terminal device, the local identity of the remote terminal device, and the identity information of the second RLC bearer; or
an optional operation 4: the second network node sends fifth information to the first network node, where the fifth information includes data radio bearer identity DRB ID information of the remote terminal device, the local identity of the remote terminal device, and identity information of a second RLC bearer, where the second RLC bearer is a bearer between the second network node and the relay terminal device, and there is a correspondence between the DRB ID information of the remote terminal device, the local identity of the remote terminal device, and the identity information of the second RLC bearer.

With reference to the second aspect, in a possible implementation, in the operation 2 or the operation 4, the method may further include: The second network node receives fourth information sent by the first network node, where the fourth information includes identity information of the remote device.

With reference to the second aspect, in a possible implementation, any one of the following is satisfied: The fourth information further includes identity information of an uplink transmission tunnel, and there is a correspondence between the identity information of the uplink transmission tunnel and at least one of the following: the DRB ID information of the remote terminal device, the local identity of the remote terminal device, the identity information of the remote terminal device, and the identity information of the second RLC bearer, where the uplink transmission tunnel is used by the first network node to receive data from the second network node on the first interface; and/or the fifth information further includes identity information of a downlink transmission tunnel, and there is a correspondence between the identity information of the downlink transmission tunnel and at least one of the following: the DRB ID information of the remote terminal device, the local identity of the remote terminal device, the identity information of the remote terminal device, and the identity information of the second RLC bearer, where the downlink transmission tunnel is used by the first network node to send data to the second network node on the first interface.

With reference to the second aspect, in a possible implementation, the first information is a user equipment context modification request UE CONTEXT MODIFICATION REQUEST message of the relay terminal device, and the second information is a user equipment context modification response UE CONTEXT MODIFICATION RESPONSE message of the relay terminal device; the fourth information is a user equipment context setup request UE CONTEXT SETUP REQUEST message of the remote terminal device, and the fifth information is a user equipment context setup response UE CONTEXT SETUP RESPONSE message of the remote terminal device; or the third information is an initial uplink RRC message transfer Initial UL RRC Message Transfer message of the remote terminal device.

With reference to the second aspect, in a possible implementation, the first network node includes a radio resource control RRC protocol layer, a service data adaptation protocol SDAP protocol layer, and a packet data convergence protocol PDCP protocol layer; the second network node includes a radio link control RLC protocol layer, a media access control MAC protocol layer, and a physical PHY protocol layer; and the first network node and the second network node are included in one base station gNB.

With reference to the second aspect, in a possible implementation, in a process in which the remote terminal device is switched from a third network node to the second network node, the second network node is a target node in the switch process, the third network node is a source node in the switch process, the first network node controls the second network node and the third network node, and any one of the following is satisfied: the first information is a user equipment context setup request UE CONTEXT SETUP REQUEST message of the remote terminal device, and the second information is a user equipment context setup response UE CONTEXT SETUP RESPONSE message of the remote terminal device; or the fourth information is a user equipment context setup request UE CONTEXT SETUP REQUEST message of the remote terminal device, and the fifth information is a user equipment context setup response UE CONTEXT SETUP RESPONSE message of the remote terminal device.

With reference to the second aspect, in a possible implementation, the third network node includes a radio link control RLC protocol layer, a media access control MAC protocol layer, and a physical PHY protocol layer, and the first network node, the second network node, and the third network node are included in one base station.

With reference to the second aspect, in a possible implementation, in the operation 1 or the operation 2, the method may further include: The fourth information or the fifth information further includes a first identity, and the first identity indicates the relay terminal device corresponding to the first RLC bearer.

The first identity is an identity of the relay terminal, a serving cell identity of the relay terminal, an identity allocated by the first network node to the relay terminal, or an identity allocated by the second network node to the relay terminal.

According to a third aspect, a communication method is provided. An entity that performs the communication method may be a first network node, or may be a function module used in the first network node, a chip or a chip system in the first network node, or a network entity or a network device that implements a function of the first network node. The following provides descriptions by using an example in which an execution body is the first network node. The communication method may include: The first network node sends sixth information to a second network node, where the sixth information includes second indication information, the second indication information indicates the second network node to set up a second radio link control RLC bearer between the second network node and a relay terminal device, the second RLC bearer is for carrying first data, and the first data is data exchanged between a remote terminal device and the second network node or the first network node. The first network node receives seventh information sent by the second network node DU, where the seventh information includes configuration information of the second RLC bearer. The radio link control RLC bearer in this embodiment has a function of an RLC channel, and therefore may also be referred to as the RLC channel. According to the method in this embodiment, details are as follows:

With reference to the third aspect, in a possible implementation, the second indication information includes information about a signaling radio bearer SRB that needs to be set up for the remote device; or the second indication information includes relay service authorization information of the relay terminal device.

With reference to the third aspect, in a possible implementation, the first data is data carried on a signaling radio bearer SRBO, a signaling radio bearer SRB 1, or a signaling radio bearer SRB2 of the remote terminal device. For example, data on the SRBO, the SRB1, and the SRB2 of the remote terminal device may be multiplexed onto one RLC bearer for transmission.

With reference to the third aspect, in a possible implementation, the sixth information is a user equipment context setup request UE CONTEXT SETUP REQUEST message, and the seventh information is a user equipment context setup response UE CONTEXT SETUP RESPONSE message.

With reference to the third aspect, in a possible implementation, the sixth information is a user equipment context setup request UE CONTEXT MODIFICATION REQUEST message, and the seventh information is a user equipment context setup response UE CONTEXT MODIFICATION RESPONSE message.

With reference to the third aspect, in a possible implementation, the first network node includes a radio resource control RRC protocol layer, a service data adaptation protocol SDAP protocol layer, and a packet data convergence protocol PDCP protocol layer; the second network node includes a radio link control RLC protocol layer, a media access control MAC protocol layer, and a physical PHY protocol layer; and the first network node and the second network node are included in one base station gNB.

According to a fourth aspect, a communication method is provided. An entity that performs the communication method may be a second network node, or may be a function module used in the second network node, a chip or a chip system in the second network node, or a network entity or a network device that implements a function of the second network node. The following provides descriptions by using an example in which an execution body is the second network node. The communication method may include: The second network node receives sixth information sent by a first network node, where the sixth information includes second indication information, the second indication information indicates the second network node to set up a second radio link control RLC bearer between the second network node and a relay terminal device, the second RLC bearer is for carrying first data, and the first data is data exchanged between a remote terminal device and the second network node or the first network node. The second network node sends seventh information to the first network node DU, where the seventh information includes configuration information of the second RLC bearer.

With reference to the fourth aspect, in a possible implementation, the second indication information includes information about a signaling radio bearer SRB that needs to be set up for the remote device; or the second indication information includes relay service authorization information of the relay terminal device.

With reference to the fourth aspect, in a possible implementation, the first data is data carried on a signaling radio bearer SRBO, a signaling radio bearer SRB 1, or a signaling radio bearer SRB2 of the remote terminal device. For example, data on the SRBO, the SRB1, and the SRB2 of the remote terminal device may be multiplexed onto one RLC bearer for transmission.

With reference to the fourth aspect, in a possible implementation, the sixth information is a user equipment context setup request UE CONTEXT SETUP REQUEST message, and the seventh information is a user equipment context setup response UE CONTEXT SETUP RESPONSE message.

With reference to the fourth aspect, in a possible implementation, the sixth information is a user equipment context setup request UE CONTEXT MODIFICATION REQUEST message, and the seventh information is a user equipment context setup response UE CONTEXT MODIFICATION RESPONSE message.

With reference to the fourth aspect, in a possible implementation, the first network node includes a radio resource control RRC protocol layer, a service data adaptation protocol SDAP protocol layer, and a packet data convergence protocol PDCP protocol layer; the second network node includes a radio link control RLC protocol layer, a media access control MAC protocol layer, and a physical PHY protocol layer; and the first network node and the second network node are included in one base station.

According to a fifth aspect, this application provides a communication apparatus. The communication apparatus may be a first network node, or a chip or a chip system in the first network node, or may be a function module that is in the first network node and that is configured to implement the method according to any one of the first aspect or the possible designs of the first aspect. The communication apparatus may implement functions performed by the first network node in the foregoing aspects or the possible designs, and the functions may be implemented by hardware executing corresponding software. The hardware or the software includes one or more modules corresponding to the functions.

For technical effects of the fifth aspect, refer to the technical effects of the first aspect and the third aspect. Details are not described herein again.

According to a sixth aspect, this application provides a communication apparatus. The communication apparatus may be a second network node, or a chip or a chip system in the second network node, or may be a function module that is in the second network node and that is configured to implement the method according to any one of the second aspect or the possible designs of the second aspect. The communication apparatus may implement functions performed by the second network node in the foregoing aspects or the possible designs, and the functions may be implemented by hardware executing corresponding software. The hardware or the software includes one or more modules corresponding to the functions. For example, the communication apparatus may include a transceiver module and a processing module.

For technical effects of the sixth aspect, refer to the technical effects of the second aspect and the fourth aspect. Details are not described herein again.

According to a seventh aspect, a communication apparatus is provided, and includes a processor and a memory. The memory is configured to store computer-executable instructions. When the communication apparatus runs, the processor executes the computer-executable instructions stored in the memory, so that the communication apparatus performs the communication method according to any one of the first aspect to the fourth aspect.

According to an eighth aspect, a communication apparatus is provided, and includes a processor. The processor is configured to: be coupled to a memory; and after reading instructions in the memory, perform the communication method according to any one of the first aspect to the fourth aspect according to the instructions.

In a possible implementation, the communication apparatus further includes the memory, and the memory is configured to store computer instructions.

In a possible implementation, the communication apparatus further includes a communication interface, and the communication interface is used by the communication apparatus to communicate with another device. For example, the communication interface may be a transceiver, an input/output interface, an interface circuit, an output circuit, an input circuit, a pin, or a related circuit.

In a possible implementation, the communication apparatus may be a chip or a chip system. When the communication apparatus is the chip system, the communication apparatus may consist of a chip, or may include the chip and another discrete device.

In a possible implementation, when the communication apparatus is the chip or the chip system, the communication interface may be an input/output interface, an interface circuit, an output circuit, an input circuit, a pin, a related circuit, or the like on the chip or the chip system. The processor may also be embodied as a processing circuit or a logic circuit.

According to a ninth aspect, a computer-readable storage medium is provided. The computer-readable storage medium stores instructions. When the instructions are run on a computer, the computer is enabled to be able to perform the communication method according to any one of the first aspect to the fourth aspect.

According to a tenth aspect, a computer program product including instructions is provided. When the computer program product runs on a computer, the computer is enabled to be able to perform the communication method according to any one of the first aspect to the fourth aspect.

According to an eleventh aspect, a radio access network device is provided. For example, the radio access network device may be a base station gNB. The radio access network device includes at least one of the following: the first network node that performs any communication method according to the first aspect and the third aspect, and the second network node that performs the communication method according to any one of the second aspect and the fourth aspect.

For technical effects brought by any design manner in the fifth aspect to the eleventh aspect, refer to the technical effects brought by different design manners in the first aspect to the fourth aspect. Details are not described herein again.

### BRIEF DESCRIPTION OF DRAWINGS

FIG. 1(a) is a schematic diagram of a scenario of direct communication between UEs according to an embodiment of this application;
FIG. 1(b) is a control plane protocol stack architecture for communication between a UE 1 and a UE 2 on a PC5 interface according to an embodiment of this application;
FIG. 2 is a schematic diagram of a communication network applicable to a U2N relay scenario according to an embodiment of this application;
FIG. 3 is a schematic diagram of a user plane protocol stack of a communication system according to an embodiment of this application;
FIG. 4 is a schematic diagram of a control plane protocol stack of a communication system according to an embodiment of this application;
FIG. 5 is a schematic diagram of a 5G communication system according to an embodiment of this application;
FIG. 6 is a schematic diagram of a gNB CU-DU separation architecture according to an embodiment of this application;
FIG. 7(a) is a schematic diagram of a communication system in a CU-DU separation architecture applicable to L2 U2N relay according to an embodiment of this application;
FIG. 7(b) is a schematic diagram of a control plane protocol stack architecture in which an adaptation layer is disposed in a DU according to an embodiment of this application;
FIG. 7(c) is a schematic diagram of a user plane protocol stack architecture in which an adaptation layer is disposed in a DU according to an embodiment of this application;
FIG. 8 is a schematic diagram of a structure of a communication apparatus according to an embodiment of this application;
FIG. 9(a) and FIG. 9(b) each are a schematic diagram of a communication method according to an embodiment of this application;
FIG. 10 is a schematic diagram of another communication method according to an embodiment of this application;
FIG. 11 is a schematic diagram of another communication method according to an embodiment of this application;
FIG. 12 is a schematic diagram of another communication method according to an embodiment of this application;
FIG. 13 is a schematic diagram of another communication method according to an embodiment of this application; and
FIG. 14 is a schematic diagram of a structure of another communication apparatus according to an embodiment of this application.

### DESCRIPTION OF EMBODIMENTS

Before embodiments of this application are described, some terms in embodiments of this application are explained and described. It should be noted that, the following explanations and descriptions are intended to facilitate understanding of embodiments of this application, but should not be construed as limiting the protection scope required by embodiments of this application.

### 1. Sidelink

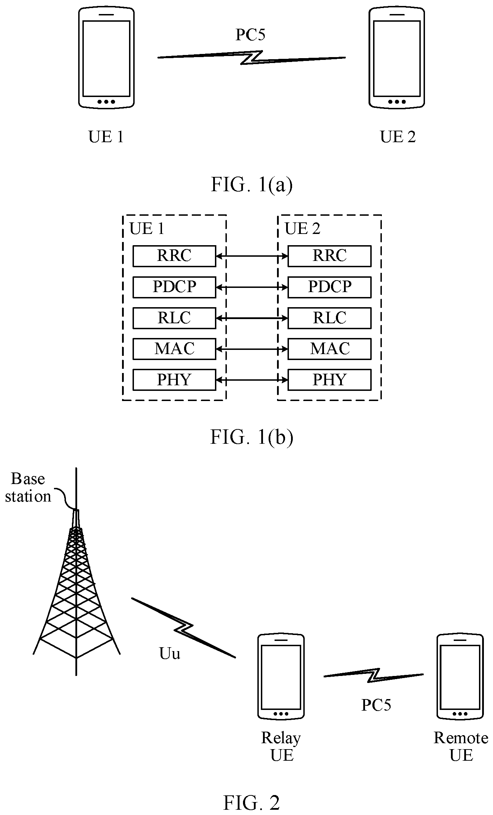

In a conventional wireless communication system, UEs may communicate with each other through a wireless network, and a data signal between the UEs is relayed via an access network device. However, a cellular network centered on a conventional access network device (for example, a conventional base station) has limitations on both data transmission quality and a service scope. To satisfy this requirement, proximity service (proximity service, ProSe) communication emerges, and the UEs may alternatively directly communicate with each other without using the access network device. This method can effectively reduce a communication delay between the UEs. A link for the direct communication between the UEs may be referred to as the sidelink. A communication interface that is between the UEs and that corresponds to the sidelink is a PC5 interface. The sidelink may also be referred to as a sidelink/sidelink/direct communication link, or the like. The PC5 interface may also be referred to as a "sidelink interface", a "direct communication interface", or the like. For example, FIG. 1(a) and FIG. 1(b) each are a schematic diagram of a scenario of direct communication between UEs. FIG. 1(a) shows that sidelink communication is performed between a UE 1 and a UE 2 through a PC5 interface. The sidelink communication may be applied to a plurality of scenarios such as device to device (device to device, D2D), machine to machine (machine to machine, M2M), or vehicle to everything (vehicle to everything, V2X). FIG. 1(b) shows a control plane protocol stack architecture for communication between a UE 1 and a UE 2 on a PC5 interface. It can be learned that the UE 1 and the UE 2 both have a radio resource control (Radio Resource Control, RRC) protocol layer, a packet data convergence protocol (Packet Data Convergence Protocol, PDCP) protocol layer, a radio link control (Radio Link Control, RLC) protocol layer, a media access control (Media Access Control, MAC) protocol layer, and a PHY protocol layer that are for end-to-end communication.

### 2. Broadcast, unicast, and groupcast communication on a sidelink

Broadcast communication is similar to broadcasting system information by a base station. To be specific, a UE sends data of a broadcast service to the outside without encrypting the data, and any other UE in an effective receiving range can receive the data of the broadcast service if the UE is interested in the broadcast service.

Unicast communication is similar to data communication performed after an RRC connection is set up between the UE and the base station, and a unicast connection needs to be first set up between two UEs. After the unicast connection is set up, the two UEs may perform data communication based on a negotiated identity. Data may be encrypted, or may not be encrypted. Compared with the broadcast communication, the unicast communication can be performed only between the two UEs between which the unicast connection has been set up. In the unicast communication, when sending data, a UE may send a source identity and a destination identity together with the data. The source identity may be an identity allocated by the UE at a sending end to the unicast connection, and the destination identity may be an identity allocated by a receiving UE at a peer end to the unicast connection.

Embodiments of this application relate to a unicast communication process. One time of unicast communication on the sidelink corresponds to a pair: a source L2 ID (Source Layer-2 Identifier) and a destination layer-2 identifier (Destination Layer-2 Identifier, L2 ID). A subheader of each sidelink media access control protocol data unit (Media Access Control Protocol Data Unit, MAC PDU) may include the source L2 ID and the destination L2 ID, so that data is transmitted to a correct receiving end.

Groupcast communication refers to communication between all UEs in a communication group, and any UE in the group can receive and send data of a groupcast service.

### 3. Radio bearer (Radio Bearer, RB)

The radio bearer is a general term of a series of protocol entities and configurations allocated by a base station to a UE, and is usually a service that is provided by a layer 2 and that is for communicating user data between the UE and the base station. The radio bearer includes a series of resources allocated to a PDCP protocol entity, an RLC protocol entity, a MAC protocol entity, and a PHY protocol entity, and the like. Radio bearers are classified into a data radio bearer (Data Radio Bearer, DRB) and a signaling radio bearer (Signaling Radio Bearer, SRB). The former is for carrying data, and the latter is for carrying a signaling message. In a sidelink communication scenario, the radio bearer is referred to as a sidelink radio bearer (Sidelink Radio Bearer, SLRB), and includes a sidelink data radio bearer SL DRB and a sidelink signaling radio bearer SL SRB.

### 4. RLC Bearer (RLC Bearer)

The RLC bearer may be a protocol entity and a configuration at an RLC layer and below the RLC layer, and includes an RLC protocol entity and a series of resources such as a logical channel. Embodiments of this application relate to two types of RLC bearers: a Uu RLC (Uu RLC) bearer and a PC5 RLC (PC5 RLC) bearer. The Uu RLC bearer is an RLC bearer on a Uu link (or a Uu interface), and the PC5 RLC bearer is an RLC bearer on a sidelink (or a PC5 interface).

### 5. U2N relay

To improve network performance, for example, improve network coverage, a relay UE (Relay UE) is for assisting in communication between a remote UE (Remote UE) and a network device. FIG. 2 is a schematic diagram of a communication network applicable to a U2N relay scenario. A base station communicates with a relay UE through a Uu interface, and the relay UE communicates with a remote UE through a PC5 interface/sidelink. The remote UE may set up a communication connection to the base station via the relay UE. In the U2N relay scenario, the relay UE provides a relay service for the remote UE.

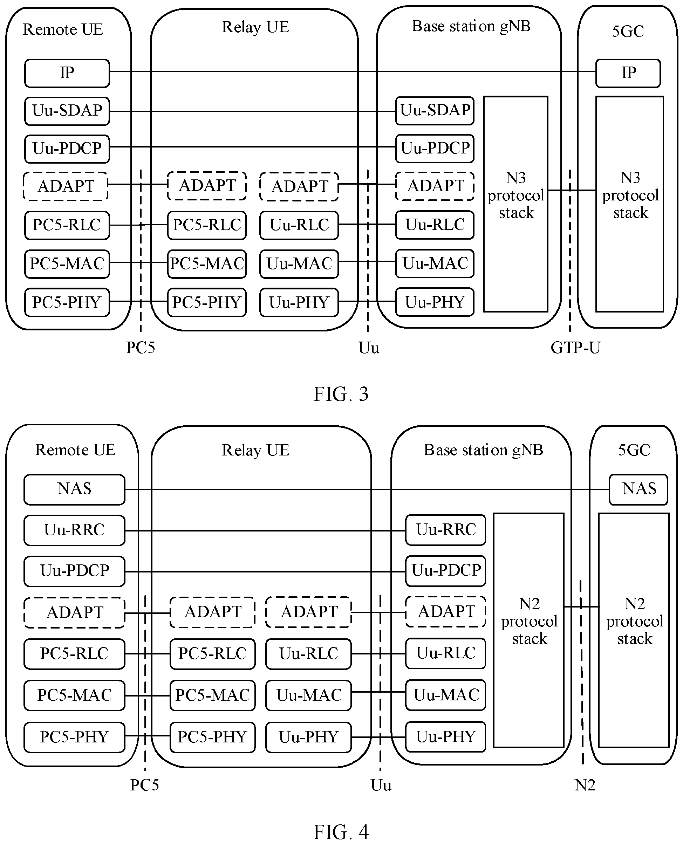

An existing U2N relay technology mainly includes two designs: layer-2 (Layer-2, L2) relay and layer-3 (Layer-3, L3) relay. Refer to FIG. 3. The L2 relay is used as an example to describe a user plane protocol stack of the communication network shown in FIG. 2. FIG. 3 shows a user plane protocol stack of a communication system including a remote UE, a relay UE, a base station gNB, and a 5G core network (5G Core Network, 5GC) device. A protocol stack of the remote UE includes, from top to bottom, an internet protocol (internet protocol, IP) layer, a service data adaptation protocol (service data adaptation protocol, SDAP) (or Uu-SDAP) layer for peer-to-peer communication with the gNB through a Uu interface, a packet data convergence protocol (packet data convergence protocol, PDCP) (or Uu-PDCP) layer for the peer-to-peer communication with the gNB through the Uu interface, an adaptation layer (Adaptation layer, ADAPT), a radio link control (radio link control, RLC) (or PC5-RLC) layer for peer-to-peer communication with the relay UE through a PC5 interface, a media access control (media access control, MAC) (or PC5-MAC) layer for the peer-to-peer communication with the relay UE through the PC5 interface, and a physical (physical, PHY) layer (or a PC5-PHY layer) for the peer-to-peer communication with the remote UE. A protocol stack that is in the relay UE and that is for communication with the remote UE includes an adaptation layer, a PC5-RLC layer, a PC5-MAC layer, and a PC5-PHY layer from top to bottom. A protocol stack that is in the relay UE and that is for communication with the gNB includes an ADAPT layer, a Uu-RLC layer, a Uu-MAC layer, and a Uu-PHY layer from top to bottom. A protocol stack that is in the gNB and that is for communication with the remote UE includes a Uu-SDAP layer and a Uu-PDCP layer from top to bottom. A protocol stack that is in the gNB and that is for communication with the relay UE includes an ADAPT layer, a Uu-RLC layer, a Uu-MAC layer, and a Uu-PHY layer from top to bottom. A protocol stack that is in the gNB and that is for communication with the 5GC through a GPRS tunneling protocol-user plane (GTP-U, GPRS Tunneling Protocol-User Plane) interface includes an N3 protocol stack. In the 5GC, a protocol stack for communication with the remote UE includes an IP layer, and a protocol stack for communication with the gNB through the GTP-U includes an N3 protocol stack.

FIG. 4 shows a control plane protocol stack of a communication system including a remote UE, a relay UE, a gNB, and a 5GC device. A protocol stack of the remote UE includes, from top to bottom, a non-access stratum (non-access stratum, NAS) for peer-to-peer communication with the 5GC, an RRC layer (or a Uu-RRC layer) for peer-to-peer communication with the gNB through a Uu interface, a PDCP layer (or a Uu-PDCP layer) for the peer-to-peer communication with the gNB through the Uu interface, an ADAPT layer, an RLC layer (or a PC5-RLC layer) for peer-to-peer communication with the relay UE through a PC5 interface, and a MAC layer (or a PC5-MAC layer) and a PHY layer (or a PC5-PHY layer) that are for the peer-to-peer communication with the relay UE through the PC5 interface. A protocol stack that is in the relay UE and that is for communication with the remote UE includes an ADAPT layer, a PC5-RLC layer, a PC5-MAC layer, and a PC5-PHY layer from top to bottom. A protocol stack that is in the relay UE and that is for communication with the gNB includes an ADAPT layer, a Uu-RLC layer, a Uu-MAC layer, and a Uu-PHY layer from top to bottom. A protocol stack that is in the gNB and that is for communication with the remote UE includes a Uu-RRC layer and a Uu-PDCP layer from top to bottom. A protocol stack that is in the gNB and that is for communication with the relay UE includes an ADAPT layer, a Uu-RLC layer, a Uu-MAC layer, and a Uu-PHY layer from top to bottom. A protocol stack that is in the gNB and that is for communication with the 5GC device through an N2 interface includes an N2 protocol stack. A protocol stack that is in the 5GC device and that is for communication with the remote UE includes a NAS layer. A protocol stack that is in the 5GC device and that is for communication with the gNB through the N2 interface includes an N2 protocol stack.

It can be learned that a data packet of the remote UE is relayed below a PDCP (Packet Data Convergence Protocol, packet data convergence protocol) layer of the relay UE. That is, the relay UE may maintain only an RLC bearer that is for relay and that includes the RLC layer, the MAC layer, and the PHY layer. Therefore, there are end-to-end PDCP, SDAP, and RRC layers between the remote UE and the base station, but there are no end-to-end RLC, MAC, and PHY layers between the remote UE and the base station.

In addition, in the protocol stack architecture shown in FIG. 3 or FIG. 4, there is an adaptation layer between the RLC layer and the PDCP layer. A main function of the adaptation layer is bearer multiplexing and demultiplexing, that is, supporting multiplexing of different bearers onto one bearer or splitting of one bearer into different bearers. The adaptation layers in the protocol stacks at two ends of the PC5 interface (that is, the sidelink) may be referred to as PC5 adaptation layers, and the adaptation layers in the protocol stacks at two ends of the Uu interface may be referred to as Uu adaptation layers.

A downlink direction is used as an example. The adaptation layer of the gNB may multiplex data on a plurality of bearers of one or more remote UEs onto one Uu RLC bearer. That is, one RLC bearer on a Uu link may carry the data on the plurality of bearers of the one or more remote UEs. On a sidelink of each remote UE, data on one or more bearers of the remote UE may be mapped to one PC5 RLC bearer. A case in an uplink direction is similar to the case in the downlink direction. The adaptation layer of the remote UE may map data on a plurality of bearers of the remote UE to one PC5 RLC bearer. The adaptation layer of the relay UE may multiplex data on different RLC bearers of one or more remote UEs onto one RLC bearer on a Uu link, thereby implementing bearer multiplexing.

To distinguish between data that belongs to different remote UEs, a remote UE identity remote UE ID needs to be allocated to each remote UE. The identity may be referred to as a local identity (Local ID), and the local ID is carried in a data packet routing process, to indicate a remote UE to which data belongs. The remote UE local ID may be allocated by a gNB serving a relay UE. The local ID allocated by the gNB may be unique within a control range of the gNB, or may be unique within a control range of the relay UE. In a possible allocation manner, after the remote UE sets up a unicast connection to the relay UE, the relay UE sends an RRC message, for example, a SidelinkUEInformationNR (SUI) message, to the gNB, to request, by using the RRC message, the gNB to allocate the local ID to the remote UE.

### 6. CU-DU architecture

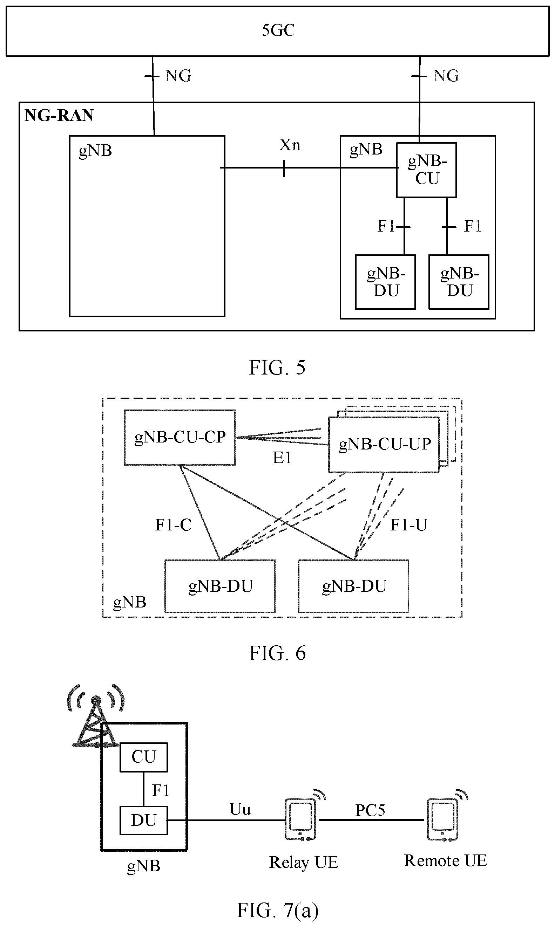

FIG. 5 is a schematic diagram of a 5G communication system. A next generation radio access network (Next Generation Radio Access Network, NG-RAN) consists of one or more base stations gNBs connected to a 5G core network 5GC. The gNB is connected to the 5GC through an NG interface, and the gNBs are connected to each other through an Xn interface. In short, in the CU-DU separation architecture, one gNB is divided into a central unit (Central unit, CU) and one or more distributed units (Distributed Units, DUs). The gNB-CU is connected to the gNB-DU through an F1 interface. Usually, one gNB-DU can be connected to only one gNB-CU.

In the CU-DU separation architecture, the gNB-CU may be responsible for RRC, SDAP, and PDCP protocol layers. In other words, the gNB-CU has functions of the RRC, SDAP, and PDCP protocol layers. The gNB-DU may be responsible for RLC, MAC, and PHY protocol layers. In other words, the gNB-DU has functions of the RLC, MAC, and PHY protocol layers.

With reference to FIG. 5, FIG. 6 is a schematic diagram of a gNB CU-DU separation architecture. The gNB-CU is further divided into a user plane (user plane, UP) and a control plane (control plane, CP). That is, the gNB-CU may be divided into two parts: a gNB-CU-CP and a gNB-CU-UP. The gNB-CU-CP is connected to the gNB-CU-UP through an E1 interface. The gNB-CU-CP is connected to an AMF through an NG control plane (NG-C) interface. The gNB-CU-CP is connected to another gNB through an Xn control plane (Xn-C) interface. The gNB-CU-CP is connected to the gNB-DU through an F1 control plane (F1-C) interface. The gNB-CU-UP is connected to the gNB-DU through an F1 user plane (F1-U) interface. Usually, one gNB-CU-UP can be connected to only one gNB-CU-CP, one gNB-DU may be connected to a plurality of gNB-CU-UPs managed by the gNB-CU-CP, and one gNB-CU-UP may be connected to a plurality of gNB-DUs managed by the gNB-CU-CP.

In the architecture in which the gNB-CU is split into the gNB-CU-CP and the gNB-CU-UP, for the control plane, the gNB-CU-CP is responsible for RRC and a PDCP entity (which is also referred to as a PDCP-C) that corresponds to an SRB. In other words, the gNB-CU-CP has a function of the RRC protocol layer entity and a function of the PDCP entity (the PDCP-C) that corresponds to the SRB. For the user plane, the gNB-CU-UP is responsible for an SDAP and a PDCP entity (which is also referred to as a PDCP-U) that corresponds to a DRB. In other words, the gNB-CU-UP has a function of the SDAP protocol layer and a function of the PDCP entity (the PDCP-U) that corresponds to the DRB.

It can be learned from the foregoing that, in the existing gNB CU-DU separation architecture, no Uu interface adaptation layer applicable to L2 U2N relay communication is configured in the gNB CU or the gNB DU. Consequently, an existing F1 interface procedure cannot support the L2 U2N relay communication. For example, the UE in the background directly communicates with the gNB-DU based on a Uu interface configuration. However, in an L2 U2N relay architecture, a Uu adaptation layer is added between the base station and a relay UE, and the base station needs to configure a remote UE and the relay UE, to support the remote UE in communicating with the base station through relay of the relay UE. Therefore, the existing F1 interface procedure is no longer applicable to L2 U2N relay.

In view of this, embodiments of this application relate to how to resolve a problem that the existing CU-DU separation architecture and F1 interface procedure are not applicable to the L2 U2N relay. For example, when the L2 U2N relay is applied to the CU-DU architecture, one or more of the following problems need to be resolved:
- How is a remote UE local ID generated and notified to the relay UE?
- Is the Uu adaptation layer in the gNB placed in the CU or DU?
- How to generate an adaptation layer configuration?
- Is a new UE initial access procedure designed to support successful access of the remote UE?
- Is a new inter-DU (Inter-gNB-DU) switch procedure managed by a same CU designed to support mobility of the remote UE?

With reference to the accompanying drawings in embodiments of this application, the following describes technical solutions provided in embodiments of this application. In descriptions of this application, unless otherwise specified, "/" represents an "or" relationship between associated objects. For example, A/B may represent A or B. In this application, "and/or" describes only an association relationship between associated objects and represents that three relationships may exist. For example, A and/or B may represent the following three cases: Only A exists, both A and B exist, and only B exists, where A or B may be singular or plural. In addition, in the descriptions of this application, "a plurality of" means two or more than two, unless otherwise specified. "At least one of the following" or a similar expression thereof means any combination of these items, and includes a singular item or any combination of plural items. For example, at least one of a, b, or c may represent a, b, c, a combination of a and b, a combination of a and c, a combination of b and c, or a combination of a, b, and c, where a, b, and c may be in a singular or plural form. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, the word such as "example" or "for example" is for representing giving an example, an illustration, or a description. Any embodiment or design scheme described as "example" or "for example" in embodiments of this application should not be explained as being more preferred or having more advantages than another embodiment or design scheme. Exactly, use of the word such as "example" or "for example" is intended to present a related concept in a specific manner for ease of understanding.

In addition, the network architecture and the service scenario in embodiments of this application are intended to describe the technical solutions in embodiments of this application more clearly, and do not constitute a limitation on the technical solutions provided in embodiments of this application. A person of ordinary skill in the art may know that, with the evolution of the network architecture and the emergence of new service scenarios, the technical solutions provided in embodiments of this application are also applicable to similar technical problems.

A network node in embodiments of this application is a radio access network (radio access network, RAN) device in a wireless communication network or a component of an access network device. For example, a first network node in embodiments may be a CU in a gNB, and a second network node may be a DU in the gNB.

A terminal device in embodiments of this application, also referred to as a user equipment (user equipment, UE), a mobile station (mobile station, MS), a mobile terminal (mobile terminal, MT), or the like, is a device that provides voice/data connectivity for a user, for example, a handheld communication device having a wireless connection function or a vehicle-mounted communication device. The terminal device may be specifically a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. Alternatively, the terminal device may be a road side unit (Road Side Unit, RSU) in a vehicle-to-everything communication system, or a communication apparatus or a communication chip in the RSU. This is not limited in embodiments of this application.

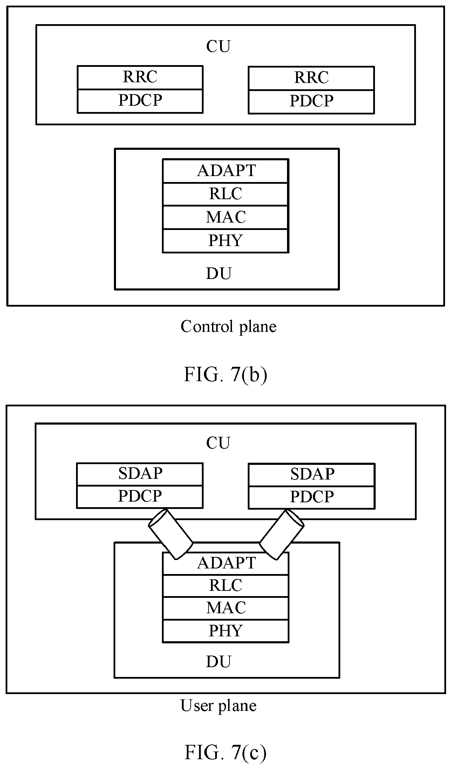

FIG. 7(a) is a schematic diagram of a communication system that is of L2 U2N relay in a CU-DU separation architecture and to which an embodiment of this application is applicable. A base station gNB consists of two parts: a first network node CU and a second network node DU. The first network node CU communicates with the second network node DU through an F1 interface. A relay UE communicates with the DU in the base station through a Uu interface. A remote UE communicates with the relay UE through a sidelink, and an interface between the remote UE and the relay UE is a PC5 interface. The relay UE may be located within cell coverage of the gNB. The remote UE may be located within the cell coverage of the gNB, or may move out of the cell coverage of the gNB. When the remote UE moves out of the cell coverage of the gNB, data of the remote UE may be relayed via the relay UE, to implement user plane interaction and signaling plane interaction between the remote UE and the base station. FIG. 7(b) is a schematic diagram of a control plane protocol stack architecture in which an adaptation layer is disposed in a DU. A CU has an RRC layer and a PDCP layer, and the DU has the adaptation ADAPT layer, an RLC layer, a MAC layer, and a PHY layer. Schematically, two RRC+PDCP entities are configured in the CU, and correspond to different SRBs. FIG. 7(c) is a schematic diagram of a user plane protocol stack architecture in which an adaptation layer is disposed in a DU. A CU has an SDAP layer and a PDCP layer, and the DU has the adaptation ADAPT layer, an RLC layer, a MAC layer, and a PHY layer. Schematically, two SDAP+PDCP entities are configured in the CU, and correspond to different DRBs.

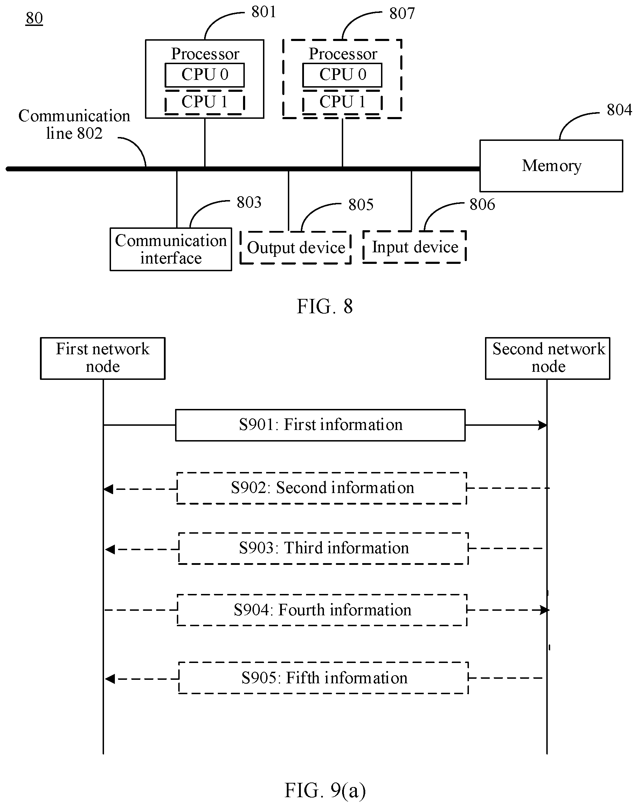

Based on the communication system provided in FIG. 7(a), FIG. 8 is a schematic diagram of a structure of a communication apparatus 80 according to an embodiment of this application. When the communication apparatus 80 has a function of the first network node in embodiments of this application, the communication apparatus 80 may be the first network node, or a chip or a chip system in the first network node. When the communication apparatus 80 has a function of the second network node in embodiments of this application, the communication apparatus 80 may be the second network node, or a chip or a chip system in the second network node. Certainly, an implementation of the first network node or the first network node is not limited to the communication apparatus 80, or may be a logical network entity having the function of the first network node or the first network node.

As shown in FIG. 8, the communication apparatus 80 may include a processor 801, a communication line 802, and a communication interface 803. Optionally, the communication apparatus 80 may further include a memory 804. The processor 801, the memory 804, and the communication interface 803 may be connected to each other through the communication line 802.

The processor 801 may be a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 801 may be another apparatus having a processing function, for example, a circuit, a component, or a software module.

The communication line 802 is for transferring information between components included in the communication apparatus 80.

The communication interface 803 is configured to communicate with another device or another communication network. The another communication network may be an Ethernet, a radio access network (radio access network, RAN), a wireless local area network (wireless local area network, WLAN), or the like. The communication interface 803 may be a radio frequency module or any apparatus that can implement communication. In this embodiment of this application, only an example in which the communication interface 803 is the radio frequency module is used for description. The radio frequency module may include an antenna, a radio frequency circuit, and the like. The radio frequency circuit may include a radio-frequency integrated chip, a power amplifier, and the like.

The memory 804 is configured to store instructions. The instruction may be a computer program.

The memory 804 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or other optical disk storage, optical disc storage, or a magnetic disk storage medium or another magnetic storage device. The optical disc storage includes a compact disc, a laser disc, an optical disc, a digital versatile disc, a Blu-ray disc, and the like.

It should be noted that the memory 804 may exist independently of the processor 801, or may be integrated with the processor 801. The memory 804 may be configured to store instructions, program code, some data, or the like. The memory 804 may be located in the communication apparatus 80, or may be located outside the communication apparatus 80. This is not limited. The processor 801 is configured to execute the instructions stored in the memory 804, to implement communication methods provided in the following embodiments of this application.

Alternatively, optionally, in this embodiment of this application, the processor 801 may implement a processing-related function in the communication methods provided in the following embodiments of this application, and the communication interface 803 may be responsible for communicating with the another device or communication network. This is not specifically limited in this embodiment of this application.

Optionally, computer-executable instructions in this embodiment of this application may also be referred to as application program code. This is not specifically limited in this embodiment of this application.

In an example, the processor 801 may include one or more CPUs, for example, a CPU 0 and a CPU 1 in FIG. 8.

In an optional implementation, the communication apparatus 80 may include a plurality of processors. For example, the communication apparatus 80 may include a processor 807 in addition to the processor 801 in FIG. 8.

In an optional implementation, the communication apparatus 80 may further include an output device 806 and an input device 807. For example, the input device 807 is a device, for example, a keyboard, a mouse, a microphone, or a joystick, and the output device 806 is a device, for example, a display or a speaker (speaker).

It should be noted that the composition structure shown in FIG. 8 does not constitute any limitation on the communication apparatus. In addition to the components shown in FIG. 8, the communication apparatus may include more or fewer components than those shown in the figure, a combination of some components, or a different component arrangement.

In this embodiment of this application, the chip system may consist of a chip, or may include the chip and another discrete component.

With reference to the communication system shown in FIG. 7(a), the following describes the communication methods provided in embodiments of this application. A network node in the following embodiments may have the component or the structure shown in FIG. 8. Actions, terms, and the like in embodiments of this application may be mutually referenced. This is not limited. In embodiments of this application, names of messages exchanged between devices, names of parameters in the messages, or the like are merely examples. Other names may alternatively be used during specific implementation. This is not limited.

A new F1 interface signaling procedure that supports remote-UE communication and that is provided in embodiments of this application may enable L2 U2N relay communication in a CU-DU architecture. In embodiments of this application, an adaptation layer may be configured in a CU, or may be configured in a DU. An example in which the adaptation layer is configured in the DU is used in the following embodiments, to provide an initial access procedure, an inter-DU switch procedure, and a UE context release procedure that are of a remote UE in the CU-DU separation architecture.

With reference to the communication system shown in FIG. 7(a), FIG. 9(a) shows a communication method according to an embodiment of this application. As shown in FIG. 9(a), the method relates to a first network node (for example, a CU) and a second network node (for example, a DU). The method may include the following steps.

S901: The first network node sends first information to the second network node.

For example, the first information is for triggering the second network node to allocate a local identity to a remote terminal device. It may be understood that S901 is an optional step.

The first network node or the second network node communicates with the remote terminal device via a relay terminal device.

S902: The second network node sends second information to the first network node, where the second information includes the local identity allocated by the second network node to the remote terminal device.

S903: The second network node sends third information to the first network node.

The third information includes identity information that is of the remote terminal device on a first interface and that is allocated by the second network node to the remote terminal device; or the third information includes identity information that is of the remote terminal device on a first interface and that is allocated by the second network node to the remote terminal device and identity information that is of the relay terminal device on the first interface and that is allocated by the second network node to the relay terminal device, where the first interface is a communication interface between the first network node and the second network node.

S904: The first network node sends fourth information to the second network node. It may be understood that S904 is an optional step.

S905: The second network node sends fifth information to the first network node.

For S904 and S905, there are the following optional operations.

### An optional operation 1 includes:

The first network node sends the fourth information to the second network node, where the fourth information includes data radio bearer identity DRB ID information of the remote terminal device and identity information of a first radio link control RLC bearer, and there is a correspondence between the DRB ID information of the remote terminal device and the identity information of the first RLC bearer; and the first network node receives the fifth information sent by the second network node, where the fifth information includes configuration information that is of the first RLC bearer and that is generated by the second network node, where the first RLC bearer is a bearer between the remote terminal device and the relay terminal device, and there is a correspondence between the DRB ID information of the remote terminal device and the identity information of the first RLC bearer.

### An optional operation 2 includes:

The first network node receives the fifth information generated by the second network node, where the fifth information includes data radio bearer identity DRB ID information of the remote terminal device, identity information of a first RLC bearer, and configuration information of the first RLC bearer, the first RLC bearer is a bearer between the remote terminal device and the relay terminal device, and there is a correspondence between the DRB ID information of the remote terminal device and the identity information of the first RLC bearer.

### An optional operation 3 includes:

The first network node sends the fourth information to the second network node, where the fourth information includes data radio bearer identity DRB ID information of the remote terminal device, the local identity of the remote terminal device, and identity information of a second RLC bearer; and the first network node receives the fifth information generated by the second network node, where the fifth information includes configuration information of the second RLC bearer, where the second RLC bearer is a bearer between the second network node and the relay terminal device, and there is a correspondence between the DRB ID information of the remote terminal device, the local identity of the remote terminal device, and the identity information of the second RLC bearer.

### An optional operation 4 includes:

The first network node receives the fifth information generated by the second network node, where the fifth information includes at least one of the following: data radio bearer identity DRB ID information of the remote terminal device, the local identity of the remote terminal device, identity information of a second RLC bearer, and configuration information of the second RLC bearer, where the second RLC bearer is a bearer between the second network node and the relay terminal device, and there is a correspondence between the DRB ID information of the remote terminal device, the local identity of the remote terminal device, and the identity information of the second RLC bearer.

It may be understood that, in the operation 2 or the operation 4, the method may also include the following step: The first network node sends fourth information to the second network node, where the fourth information includes identity information of the remote device.

In an optional design, the fourth information further includes identity information of an uplink transmission tunnel, and there is a correspondence between the identity information of the uplink transmission tunnel and at least one of the following: the DRB ID information of the remote terminal device, the local identity of the remote terminal device, the identity information of the remote terminal device, and the identity information of the second RLC bearer, where the uplink transmission tunnel is used by the first network node to receive data from the second network node on the first interface; and/or the fifth information further includes identity information of a downlink transmission tunnel, and there is a correspondence between the identity information of the downlink transmission tunnel and at least one of the following: the DRB ID information of the remote terminal device, the local identity of the remote terminal device, the identity information of the remote terminal device, and the identity information of the second RLC bearer, where the downlink transmission tunnel is used by the first network node to send data to the second network node on the first interface.

In an optional design, the first network node may further receive first indication information from the relay terminal device, where the first indication information includes the identity information of the remote terminal device; the first indication information is for requesting to allocate the local identity to the remote terminal device; and the local identity of the remote terminal device uniquely identifies the remote terminal device within a control range of the first network node, or the local identity of the remote terminal device uniquely identifies the remote terminal device within a control range of the relay terminal device.

In an optional design, the fourth information further includes first identity information, and the first identity indicates the relay terminal device corresponding to the first RLC bearer. For example, the first identity information may be a layer-2 identifier of the relay terminal, and indicates that the first RLC bearer is the RLC bearer between the remote terminal and the relay terminal that is indicated by the layer-2 identifier. When the remote terminal communicates with the second network node via a plurality of relay terminals, the indication information may be for distinguishing the relay terminal device corresponding to the first RLC bearer.

Optionally, the first identity may further indicate a serving cell identity of the relay terminal, for example, in a scenario in which there is a limitation that the plurality of relay terminals need to be located in different serving cells. In addition, the first identity may alternatively be identity information allocated by the first network node to the relay terminal. For example, when the remote terminal is connected to three relay terminals, the first network node may respectively allocate identities 0, 1, and 2 to the three relay terminals. In addition, the identities 0, 1, and 2, together with the identity information of the first RLC bearer, indicate the second network node by using the fourth information.

In an optional design, the fifth information further includes first identity information, and the first identity indicates the relay terminal device corresponding to the first RLC bearer. For example, the first identity information may be a layer-2 identifier of the relay terminal, and indicates that the first RLC bearer is the RLC bearer between the remote terminal and the relay terminal that is indicated by the layer-2 identifier. When the remote terminal communicates with the second network node via a plurality of relay terminals, the indication information may be for distinguishing the relay terminal device corresponding to the first RLC bearer.

Optionally, the first identity may further indicate a serving cell identity of the relay terminal, for example, in a scenario in which there is a limitation that the plurality of relay terminals need to be located in different serving cells. In addition, the first identity may alternatively be identity information allocated by the second network node to the relay terminal. For example, when the remote terminal is connected to three relay terminals, the second network node may respectively allocate identities 0, 1, and 2 to the three relay terminals. In addition, the identities 0, 1, and 2, together with the identity information of the first RLC bearer, indicate the first network node by using the fifth information.

In this embodiment, as described above, the first information may be a user equipment context modification request UE CONTEXT MODIFICATION REQUEST message of the relay terminal device, and the second information may be a user equipment context modification response UE CONTEXT MODIFICATION RESPONSE message of the relay terminal device; the first information may be a user equipment context modification request UE CONTEXT SETUP REQUEST message of the relay terminal device, and the second information may be a user equipment context modification response UE CONTEXT SETUP RESPONSE message of the relay terminal device; the fourth information may be a user equipment context setup request UE CONTEXT SETUP REQUEST message of the remote terminal device, and the fifth information may be a user equipment context setup response UE CONTEXT SETUP RESPONSE message of the remote terminal device; or the third information may be an initial uplink RRC message transfer Initial UL RRC Message Transfer message of the remote terminal device.

In this embodiment, the first network node may include a radio resource control RRC protocol layer, a service data adaptation protocol SDAP protocol layer, and a packet data convergence protocol PDCP protocol layer; the second network node may include a radio link control RLC protocol layer, a media access control MAC protocol layer, and a physical PHY protocol layer; and the first network node and the second network node may be included in one base station.

In a switch scenario, in a process in which the remote terminal device is switched from a third network node to the second network node, the second network node is a target node in the switch process, the third network node is a source node in the switch process, and the first network node controls the second network node and the third network node, where the third network node includes a radio link control RLC protocol layer, a media access control MAC protocol layer, and a physical PHY protocol layer, and the first network node, the second network node, and the third network node are included in one base station. In addition, any one of the following is satisfied: The first information is a user equipment context setup request UE CONTEXT SETUP REQUEST message of the remote terminal device, and the second information is a user equipment context setup response UE CONTEXT SETUP RESPONSE message; or the fourth information is a user equipment context setup request UE CONTEXT SETUP REQUEST message of the remote terminal device, and the fifth information is a user equipment context setup response UE CONTEXT SETUP RESPONSE message.

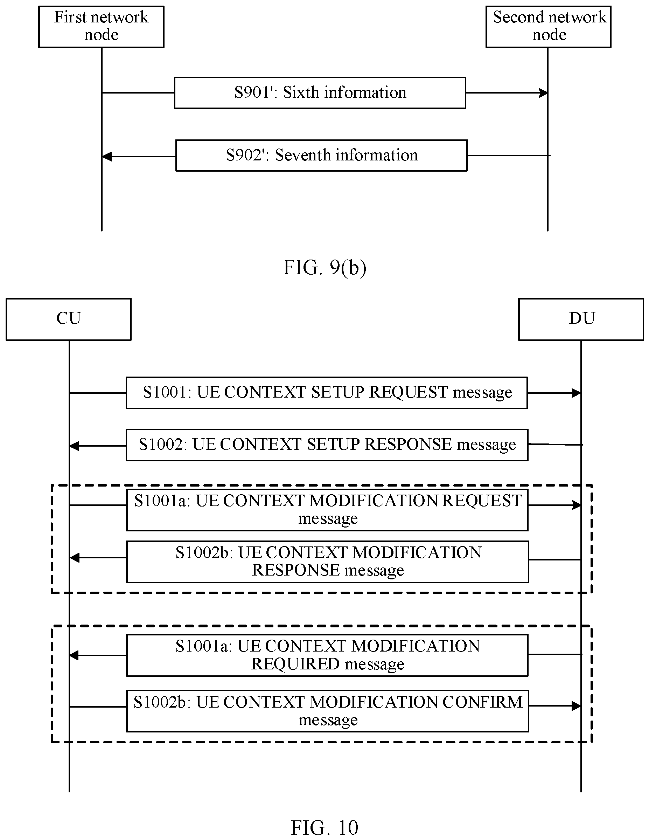

FIG. 9(b) shows another communication method according to an embodiment of this application. The method relates to a first network node (for example, a CU) and a second network node (for example, a DU). The method may include the following steps.

S901': The first network node sends sixth information to the second network node.

The sixth information includes second indication information, the second indication information indicates the second network node to set up a second radio link control RLC bearer between the second network node and a relay terminal device, the second RLC bearer is for carrying first data, and the first data is data exchanged between a remote terminal device and the second network node or the first network node. The second RLC bearer may also be referred to as an RLC channel.

For example, the second indication information includes information about a signaling radio bearer SRB that needs to be set up for the remote device; or the second indication information includes relay service authorization information of the relay terminal device.

For example, the first data is data carried on a signaling radio bearer SRBO, a signaling radio bearer SRB1, or a signaling radio bearer SRB2 of the remote terminal device. It should be noted that the data carried on the signaling radio bearer SRBO, the signaling radio bearer SRB 1, or the signaling radio bearer SRB2 of the remote terminal device may be multiplexed onto a same Uu RLC bearer.

S902': The second network node sends seventh information to the first network node.

The sixth information is a user equipment context setup request UE CONTEXT SETUP REQUEST message, and the seventh information is a user equipment context setup response UE CONTEXT SETUP RESPONSE message.

It may be understood that, in S901' and S902', whether the second RLC bearer is configured before random access of the remote UE or in a random access process of the remote UE is not limited.

For example, the first network node includes a radio resource control RRC protocol layer, a service data adaptation protocol SDAP protocol layer, and a packet data convergence protocol PDCP protocol layer; the second network node includes a radio link control RLC protocol layer, a media access control MAC protocol layer, and a physical PHY protocol layer; and the first network node and the second network node may be included in one radio access network device, for example, a base station gNB.

Refer to the communication system shown in FIG. 7(a) and the communication methods shown in FIG. 9(a) and FIG. 9(b). An example in which a Uu adaptation layer is disposed in a DU is used. Embodiments of this application provide a UE initial access procedure of a remote UE. Specifically, in comparison with a scenario in which a UE directly communicates with a base station through a Uu link in a conventional technology, a relay UE further needs to make preparations in the following two aspects before the remote UE performs initial access:
- An RLC bearer for carrying SRB signaling of the remote UE is set up between the relay UE and the DU (that is, on the Uu link). For ease of description, the RLC bearer between the relay UE and the DU is collectively referred to as a Uu RLC bearer below.
- The base station allocates a local identity local ID to the remote UE, and notifies the relay UE of the local identity. In a subsequent data exchange process, after receiving SRBO signaling of the remote UE, the relay UE needs to add the local ID before forwarding the SRBO signaling, so that the base station can identify the remote UE to which the received SRBO signaling belongs.

Therefore, the base station may pre-set up the Uu RLC bearer (or an RLC channel) between the DU and the relay UE in an initial context setup process of the relay UE, to carry the SRB signaling of the remote UE.

For a process of setting up the Uu RLC bearer for carrying the SRB signaling of the remote UE, FIG. 10 is a schematic diagram of another communication method according to an embodiment of this application. The method may include the following steps.

S1001: A CU sends a user equipment context setup request UE CONTEXT SETUP REQUEST message to a DU.

The UE CONTEXT SETUP REQUEST message is for requesting the DU to set up a Uu RLC bearer, and the RLC bearer is for carrying SRB0/1/2 signaling of a remote UE.

S1002: The DU sends a user equipment context setup response UE CONTEXT SETUP RESPONSE message to the CU. The UE CONTEXT SETUP RESPONSE message carries configuration information of the Uu RLC bearer set up by the DU. In a possible manner, the CU configures a correspondence between the Uu RLC bearer and an SRB0/1/2 of the remote UE, and indicates the DU to set up the Uu RLC bearer. Alternatively, the CU indicates the DU to set up the Uu RLC bearer, and indicates a correspondence between the Uu RLC bearer and an SRB0/1/2 of the remote UE to the DU.

In another optional manner, an initial context setup process of a relay UE remains unchanged. A base station may set up, by using a context update procedure, a Uu RLC bearer for carrying SRB signaling of a remote UE. The procedure may be initiated by a CU (for example, steps S1001a and S1002a), or may be initiated by a DU (for example, steps S1001b and S1002b). Specifically, the method may include the following steps.

S1001a: The CU sends a UE context modification request UE CONTEXT MODIFICATION REQUEST message to a DU. The UE CONTEXT MODIFICATION REQUEST message may indicate the DU to set up a Uu RLC bearer, to carry an SRB0/1/2 of the remote UE.

S1002a: The DU sends a UE context modification response UE CONTEXT MODIFICATION RESPONSE message to the CU, where the UE CONTEXT MODIFICATION RESPONSE message carries configuration information that is of the Uu RLC bearer and that is generated by the DU.

In a possible manner, the CU configures a correspondence between the Uu RLC bearer and an SRB0/1/2 of the remote UE, and indicates the DU to set up the Uu RLC bearer. Alternatively, the CU indicates the DU to set up the Uu RLC bearer, and indicates the DU to generate a correspondence between the Uu RLC bearer and an SRB0/1/2 of the remote UE.

Alternatively, optionally, the method may include the following steps.

S1001b: The DU sends a user equipment context modification required UE CONTEXT MODIFICATION REQUIRED message to a CU. Configuration information that is of the Uu RLC bearer and that is generated by the DU is sent to the CU via the UE CONTEXT MODIFICATION REQUIRED message. It may be understood that the Uu RLC bearer configured by the DU may further indicate a correspondence between the Uu RLC bearer and an SRB0/1/2 of the remote UE.

S 1002b: The CU sends a user equipment context modification confirm UE CONTEXT MODIFICATION CONFIRM message to the DU. The CU confirms, to the DU by using the UE CONTEXT MODIFICATION CONFIRM message, the RLC bearer that is successfully set up by the DU.

Optionally, the user equipment context update procedure in S 1001, S1002, S1001a, S1002a, S1001b, and S1002b may be initiated based on a capability and authorization. For example, F1 interface signaling (for example, the UE CONTEXT SETUP REQUEST message or the UE CONTEXT MODIFICATION REQUEST message) sent by the CU to the DU may carry relay service authorization information related to the relay UE. In this case, the CU or the DU may trigger the foregoing context update procedure based on the authorization information. Alternatively, in a UE capability enquiry process, after receiving a UECapabilityEnquiry message sent by the base station, the relay UE may notify the base station of UE capability information of the relay UE by using a UECapabilityInformation message. If the UE capability information includes information indicating that the UE can support relay communication, the base station may trigger the foregoing context update procedure accordingly.

It may be understood that the foregoing user equipment context update procedure may alternatively be initiated when the first remote UE performs access. As described below, after a remote UE accesses a relay UE, the relay UE sends SUI information to a base station, to notify the base station that sidelink communication is to be performed between the remote UE and the relay UE, and request the base station to allocate a corresponding transmission resource. After receiving the SUI information, the base station triggers a context update procedure, to pre-set up a Uu RLC bearer for subsequent SRB signaling of the remote UE.

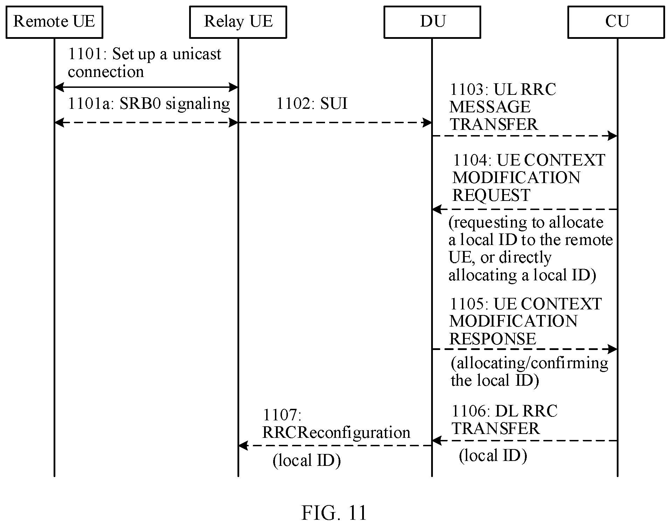

For a process of allocating the local identity local ID to the remote UE, FIG. 11 is a schematic diagram of another communication method according to an embodiment of this application. The method may include the following steps.

S1101: A remote UE sets up a unicast connection to a relay UE.

S1102: The relay UE sends an SUI message to a DU.

For example, after the remote UE sets up the unicast connection to the relay UE, the relay UE is triggered to send the sidelink user equipment information (SidelinkUEInformation, SUI) to a base station (via the gNB-DU). The SUI message may be for requesting to allocate a local ID to the remote UE.

Optional operation S1101a: After the remote UE sends SRBO signaling (for example, an MSG3 message or an RRCSetupRequest message) to the relay UE, the relay UE is triggered to send the SUI message to the base station.

S1103: The DU sends an uplink RRC message transfer UL RRC MESSAGE TRANSFER message to a CU.

The UL RRC MESSAGE TRANSFER message includes the SUI message sent by the relay UE to the gNB-DU. That is, the DU transparently transmits the SUI message to the CU. The SUI message may be parsed at an RRC layer of the CU.

UEs that set up a unicast connection to the relay UE and attempt to perform sidelink communication with the relay UE may usually include two types: a remote UE that obtains a relay service from the relay UE and a UE that directly communicates with the relay UE through a sidelink. When the UE accesses the relay UE and attempts to communicate with the relay UE through the sidelink, the relay UE may be triggered to send the SUI message to the base station, where the SUI message indicates a destination L2 ID of the remote UE, and is for requesting a sidelink transmission resource. For example, the SUI message may carry the destination L2 ID of the remote UE. After receiving the destination L2 ID of the remote UE, the base station may allocate the sidelink transmission resource to the remote UE. However, for this embodiment of this application, the base station further needs to allocate the local ID to the remote UE. Therefore, the base station needs to be able to distinguish whether the destination L2 ID reported in the SUI identifies the remote UE. Specifically, the following several optional manners may be included:
- A new uplink RRC message is defined, is different from an existing SUI message, and is for requesting the remote UE local ID. The base station may determine, by using the newly defined uplink RRC message, that the local ID needs to be allocated to the remote UE.
- In an existing SUI message, a new IE is introduced, to indicate a remote UE L2 ID, so that the base station determines, based on the indicated remote UE L2 ID, that the local ID needs to be allocated to the remote UE.
- In an existing SUI message, 1-bit indication information is introduced, to indicate whether the UE is the remote UE. For example, a reserved bit spare1 in IE sl-casttype in the existing SUI message identifies whether the UE is the remote UE. For example, if a value of the bit is 1, it indicates that the UE is the remote UE. Alternatively, if a value of the bit is 0, it may indicate that the UE is the remote UE.

S1104: The CU sends a user equipment context modification request UE CONTEXT MODIFICATION REQUEST message to the DU.

The UE CONTEXT MODIFICATION REQUEST message indicates the DU to allocate the local ID to the remote UE. For example, the SUI message is directly forwarded to the DU, or dedicated indication information is defined and carried in the UE CONTEXT MODIFICATION REQUEST message. Alternatively, the CU may send, to the DU via the UE CONTEXT MODIFICATION REQUEST message, the remote UE local ID allocated by the CU.

In the foregoing steps, the gNB-CU may receive the remote UE L2 ID from the SUI message. Therefore, the base station may generate a corresponding remote UE local ID for each remote UE L2 ID, and the base station may maintain a correspondence between the remote UE L2 ID and the remote UE local ID. In another optional manner, the relay UE may carry a system architecture evolution temporary mobile station identifier (system architecture evolution temporary mobile station identifier, S-TMSI) of the remote UE in the SUI message to be sent. The relay UE may obtain the S-TMSI from the remote UE in a unicast connection setup process, so that the base station can allocate a corresponding local ID to each S-TMSI, and maintain a correspondence between the S-TMSI and the local ID.

S1105: The DU sends a user equipment context modification response UE CONTEXT MODIFICATION RESPONSE message to the CU.

The DU sends the allocated remote UE local ID to the CU via the UE CONTEXT MODIFICATION RESPONSE message. Alternatively, when the CU sends, to the DU via the UE CONTEXT MODIFICATION REQUEST message, the remote UE local ID allocated by the CU, the DU may confirm, by using the UE CONTEXT MODIFICATION RESPONSE message, the remote UE local ID sent by the CU to the DU.

S1106: The CU sends a downlink RRC transfer DL RRC TRANSFER message to the DU, where the downlink RRC transfer message carries the remote UE local ID.

The CU may carry the allocated remote UE local ID in an RRC message, for example, an RRC reconfiguration RRCReconfiguration message, and send the remote UE local ID to the DU via the DL RRC TRANSFER message, where the DL RRC TRANSFER message may carry the RRCReconfiguration message.

S1107: The DU sends, to the relay UE, the RRC reconfiguration RRCReconfiguration message generated by the CU, where the RRCReconfiguration message carries the local ID allocated to the remote UE.

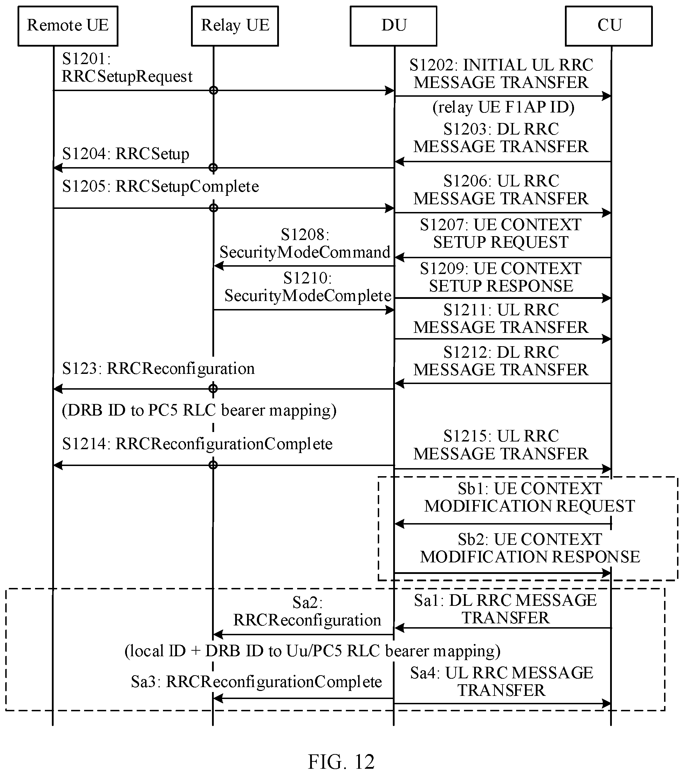

Refer to the embodiments of this application shown in FIG. 7(a) to FIG. 11. FIG. 12 is a schematic diagram of another communication method according to an embodiment of this application. A communication method in which initial access is provided for a remote UE is provided. The method includes the following steps.

S1201: The remote UE sends an RRC setup request RRCSetupRequest message to a DU.

The remote UE may send the RRCsetupRequest message to the DU by using a relay function of a relay UE, to request to set up an RRC connection between the remote UE and a gNB. In a process in which the relay UE forwards the RRCsetupRequest message, the relay UE may add a remote UE local ID to a header of an SRBO data packet (for example, an adaptation layer PDU) of the remote UE. Optionally, the relay UE may forward SRBO data based on Uu RLC bearer configurations configured in the various configuration methods in the embodiment shown in FIG. 10.

S1202: The DU sends an initial uplink RRC message transfer INITIAL UL RRC MESSAGE TRANSFER message to a CU.

After the DU receives the SRBO data packet that is of the remote UE and that carries the remote UE local ID identity, the DU allocates a UE F1AP ID on a user equipment F1 interface to the remote UE, and may associate the remote UE local ID with the DU UE F1AP ID of the remote UE. Then, the DU sends the INITIAL UL RRC MESSAGE TRANSFER message to the CU, where the message carries the DU UE F1AP ID that is of the remote UE and that is allocated by the DU.

It may be understood that the CU needs to sense a relay UE to which the remote UE is connected. Therefore, the INITIAL UL RRC MESSAGE TRANSFER message may carry a DU UE F1AP ID that is of the relay UE and that is allocated by the DU to the relay UE.

If the local ID allocated by the gNB is unique within a control range of the gNB, in another optional implementation, the INITIAL UL RRC MESSAGE TRANSFER may carry the remote UE local ID, and the CU may also determine, based on the local ID, a relay UE to which the remote UE is connected.

S1203: The CU sends a downlink RRC message transfer DL RRC MESSAGE TRANSFER message to the DU.

The CU allocates, to the remote UE, a CU UE F1AP ID of the remote UE on the F1 interface, generates an RRC setup RRCSetup message to be sent to the remote UE, and sends the RRCSetup message to the DU via the DL RRC MESSAGE TRANSFER message.

S1204: The DU sends the RRCSetup message to the remote UE.

The DU may send the RRCSetup message to the remote UE by using the relay function of the relay UE. To enable the relay UE to learn of a remote UE to which the RRC message belongs, when constructing the adaptation layer PDU, an adaptation layer carries the remote UE local ID in an adaptation layer header.

S1205: The remote UE sends an RRC setup complete RRCSetupComplete message to the DU.

The remote UE may send the RRCSetupComplete message to the DU by using the relay function of the relay UE.

S1206: The DU sends an uplink RRC message transfer UL RRC MESSAGE TRANSFER message to the CU.

The DU may carry the RRCSetupComplete message in the UL RRC MESSAGE TRANSFER message, and forward, to the CU, the RRCSetupComplete message sent by the remote UE.

S1207: The CU sends a user equipment context setup request UE CONTEXT SETUP REQUEST message to the DU.

The CU sends the UE CONTEXT SETUP REQUEST of the remote UE to the DU, to indicate the DU to set up a UE context of the remote UE.

S1208 and S1210: The relay UE and the DU exchange a security mode command (SecurityModeCommand, SMC) message. A process of exchanging the SMC messages between the relay UE and the DU may be for activating a security mode on an access stratum (access stratum, AS) side.

S1209: The DU replies to the CU with a user equipment context setup response UE CONTEXT SETUP RESPONSE message, to indicate that the UE context of the remote UE is successfully set up in the DU.

In an implementation, through steps S1207 and S1209, the gNB may separately configure adaptation layer configuration information of the relay UE and the remote UE in addition to context content of the remote UE, such as a cell configuration, ID information of the remote UE, bearer configuration information of an SRB/a DRB of the remote UE, and an RRC message (for example, the SMC message in S1208) sent by the gNB to the remote UE. The adaptation layer configuration information of the relay UE and the remote UE may be configured by the gNB-DU or the gNB-CU. The following describes different optional configuration manners.
1. An adaptation layer configuration of the remote UE is determined by the CU.

Adaptation layer configuration content of the remote UE may include DRB ID information of the remote UE and PC5 RLC bearer information, and there is a mapping relationship between the DRB ID information of the remote UE and the PC5 RLC bearer information. After configuring the foregoing adaptation layer information, the CU may send the foregoing adaptation layer configuration content of the remote UE to the DU via the UE CONTEXT SETUP REQUEST message in step S1207. Further, the DU may set up a corresponding configuration of a PC5 RLC bearer based on an indication of the CU, and send configuration information of the PC5 RLC bearer to the CU via the UE CONTEXT SETUP RESPONSE message in step 1209.

In addition, the adaptation layer configuration content of the remote UE may include identity information of the relay UE, to indicate that the PC5 RLC bearer is a PC5 RLC bearer between the remote UE and the indicated relay UE. The identity information of the relay UE may be a layer-2 identifier of the relay UE, identity information allocated by the CU to the relay UE, or a serving cell identity of the relay UE.

2. An adaptation layer configuration of the remote UE is determined by the DU.

The CU may indicate, by using the UE CONTEXT SETUP REQUEST message in step S1207, the DU to configure the adaptation layer configuration information for the remote UE. Then, the DU sends, to the CU via the UE CONTEXT SETUP RESPONSE message, adaptation layer configuration content that is of the remote UE and that is configured by the DU and corresponding configuration information of a PC5 RLC bearer. The adaptation layer configuration content of the remote UE may include DRB ID information of the remote UE and PC5 RLC bearer information, and there is a mapping relationship between the DRB ID information of the remote UE and the PC5 RLC bearer information. Optionally, the CU may not need to carry additional indication information in the UE CONTEXT SETUP REQUEST message in step S1207. Because the DU may learn, based on an uploaded RRC message, that this is a remote UE, the adaptation layer configuration content of the remote UE and the corresponding configuration information of the PC5 RLC bearer may be determined through internal implementation of the DU.

In addition, the adaptation layer configuration content of the remote UE may include identity information of the relay UE, to indicate that the PC5 RLC bearer is a PC5 RLC bearer between the remote UE and the indicated relay UE. The identity information of the relay UE may be a layer-2 identifier of the relay UE, identity information allocated by the CU to the relay UE, or a serving cell identity of the relay UE.

3. An adaptation layer configuration of the relay UE is determined by the CU.

The CU may determine to create a Uu RLC bearer of the relay UE or reuse an existing Uu RLC bearer of the relay UE to carry data of the remote UE. The Uu RLC bearer herein may be an RLC bearer on a Uu link between the DU and the relay UE.

In step S1207, the UE CONTEXT SETUP REQUEST message sent by the CU to the DU may carry ID information of a Uu RLC bearer that is requested to be created or modified, may further carry DRB ID information that is of the remote UE and that corresponds to the Uu RLC bearer, and may further carry a QoS requirement of the Uu RLC bearer. A mapping relationship between the Uu RLC bearer and a remote UE DRB ID needs to be configured for the adaptation layer of the relay UE, and QoS requirement information of the RLC bearer may be used as a reference for the DU to generate an RLC bearer configuration. In addition, the UE CONTEXT SETUP REQUEST message may further include uplink tunnel information. An uplink tunnel is a tunnel needed by the DU to send data to the CU. Each tunnel corresponds to one remote UE DRB ID, and one tunnel address may be allocated to the uplink tunnel to identify the uplink tunnel. As shown in FIG. 7(c), uplink data is delivered from the adaptation layer to a tunnel (for example, an F1-U GTP tunnel) on an F1 interface, and the adaptation layer needs to deliver data multiplexed on the Uu RLC bearer to a corresponding tunnel. Therefore, the CU further needs to configure a mapping relationship between the remote UE ID, the DRB ID, and a tunnel address, and notify the DU of the remote UE ID, the DRB ID, and the tunnel address (including the mapping relationship between the remote UE ID, the DRB ID, and the tunnel address).

After receiving content (the remote UE ID, the DRB ID, and the tunnel address) configured by the CU, the DU may generate, based on an indication of the CU, configuration information of the Uu RLC bearer that needs to be created or modified, and send, to the CU via the UE CONTEXT SETUP RESPONSE message in step S1209, the configuration information of the Uu RLC bearer that needs to be created or modified. For example, the configuration information of the Uu RLC bearer may be sent in a form of a separate RRC container (container) in the UE CONTEXT SETUP RESPONSE message. In addition, the UE CONTEXT SETUP RESPONSE message may further include configuration information of a downlink tunnel (that is, a direction of sending to the DU by the CU). Each downlink tunnel may correspond to one remote UE DRB ID, and one tunnel address may be further allocated to the downlink tunnel to identify the downlink tunnel. It may be understood that, on a DU side, a plurality of tunnels may correspond to one adaptation layer or one Uu RLC bearer. Therefore, a same tunnel address may be allocated to different remote UE DRB IDs. One address is allocated to all tunnels, or an address is allocated based on a granularity of the Uu RLC bearer. That is, a same address is allocated to tunnels corresponding to DRBs multiplexed on the Uu RLC bearer.

In a receiving and sending process of tunnels, although addresses on the DU side are the same, different tunnels may be distinguished by using addresses on a CU side.

4. An adaptation layer configuration of the relay UE is determined by the DU.

In step S1207, the UE CONTEXT SETUP REQUEST message sent by the CU to the DU may be for requesting the DU to configure the adaptation layer configuration of the relay UE for the remote UE. The UE CONTEXT SETUP REQUEST message may carry QoS information of a remote UE bearer and uplink tunnel information. In this case, the DU may determine whether to create a Uu RLC bearer to carry data of the remote UE, and configure remote UE DRB IDs and downlink tunnel information that correspond to different Uu RLC bearers. There is a correspondence between Uu RLC bearer information, DRB ID information of the remote UE, and the downlink tunnel information. An allocation manner is the same as that described above. In step S1209, the DU sends the configuration to the CU via the UE CONTEXT SETUP RESPONSE message.

In the foregoing method, the adaptation layer configurations of the remote UE and the relay UE are both generated in a context setup process of the remote UE. In another optional implementation, only an adaptation layer configuration of the remote UE is generated in a context setup process of the remote UE, and an adaptation layer configuration of the relay UE is generated in a UE context modification UE context modification process of the relay UE. Similarly, in this process, the adaptation layer configuration of the relay UE may also be initiated by the DU or the CU. This is similar to step S1207 and step S1209. A difference lies in that signaling interaction between the DU and the CU is performed by using F1 interface signaling associated with the relay UE. The following provides descriptions by using an example in which the CU configures adaptation layer configuration information.

### As shown in FIG. 12, details are as follows:

Step Sb1: The CU sends a user equipment context modification request UE CONTEXT MODIFICATION REQUEST message to the DU.

The CU may determine to set up a new Uu RLC bearer for data of the remote UE. Therefore, the CU sends the UE CONTEXT MODIFICATION REQUEST message to the DU, and indicates, by using an information element in the message, an ID of the created Uu RLC bearer and DRB ID information that is of the remote UE and that corresponds to each Uu RLC bearer. The UE CONTEXT MODIFICATION REQUEST message may include a DRB ID and QoS information of the Uu RLC bearer that needs to be created, and may further include uplink tunnel information.

Step Sb2: The DU sends a user equipment context modification response UE CONTEXT MODIFICATION RESPONSE message to the CU.

The DU may determine configuration information of the Uu RLC bearer based on an indication of the CU, and send the configuration information of the Uu RLC bearer between the relay UE and the DU to the CU via the UE CONTEXT MODIFICATION RESPONSE message.

S1211: The DU sends an uplink RRC message transfer UL RRC MESSAGE TRANSFER message to the CU.

Specifically, the DU may carry, in the UL RRC MESSAGE TRANSFER message, the SMC message replied with by the relay UE, and forward, to the CU, the SMC message replied with by the relay UE.

S1212: The CU sends a downlink RRC message transfer DL RRC MESSAGE TRANSFER message to the DU.

Specifically, the CU may generate an RRC reconfiguration RRCReconfiguration message. The RRC reconfiguration RRCReconfiguration message includes mapping relationship configuration information of the remote UE. For example, the mapping relationship configuration information of the remote UE may include one or more of the following information and a mapping relationship between the following information: the ID information of the remote UE, the DRB ID information of the remote UE, tunnel address information, identity information of the Uu RLC bearer, identity information of the PC5 RLC bearer, and the identity information corresponding to the relay terminal, and is sent to the DU via the DL RRC MESSAGE TRANSFER message. An identity corresponding to the relay terminal may include one or more of the following: the layer-2 identifier/a C-RNTI/an F1AP ID of the relay terminal, a temporary identity allocated by the CU to the relay terminal device, and an identity of a serving cell in which the relay terminal is located.

S1213: The DU sends the RRCReconfiguration message to the remote UE.

For example, the RRCReconfiguration message may include a mapping relationship between the remote UE ID and the PC5 RLC bearer.

S1214: The remote UE sends an RRCReconfigurationComplete message to the DU, to indicate that RRC connection configuration is completed.

S1215. The DU sends a UL RRC MESSAGE TRANSFER message to the CU, where the UL RRC MESSAGE TRANSFER message carries the RRCReconfigurationComplete message sent by the remote UE to the DU, to forward, to the CU, the RRC message sent by the remote UE.

In addition, the CU may further deliver the adaptation layer configuration to the relay UE. The following steps are included:
Step Sa1: The CU sends a DL RRC MESSAGE TRANSFER message to the DU.

The CU may generate an RRCReconfiguration message, where the RRCReconfiguration message includes the adaptation layer configuration information of the relay UE, and is sent to the DU via the DL RRC MESSAGE TRANSFER message.

Step Sa2: The DU sends the RRCReconfiguration message to the relay UE, where the RRCReconfiguration message may include one or more of information such as the local ID information of the remote UE, the DRB ID information of the remote UE, the Uu RLC bearer, the PC5 RLC bearer, and the identity information corresponding to the relay terminal, and there is a mapping relationship between the information.

Step Sa3: The remote UE sends an RRCReconfigurationComplete message to the DU, to indicate that RRC connection configuration is completed.

Step Sa4: The DU forwards, to the CU via a UL RRC MESSAGE TRANSFER message, the RRC message sent by the relay UE.

If in step S1207 and step S1209 (or step Sb1 and step Sb2), the gNB configures the new Uu RLC bearer or modifies the original Uu RLC bearer for the data of the remote UE, the gNB-CU may carry the configuration information of the Uu RLC bearer in an RRC message to be sent to the relay UE.

To support L2 U2N relay in a CU-DU separation architecture, in comparison with a conventional technology, the adaptation layer is introduced in the gNB-DU in this embodiment of this application to support an L2 U2N relay protocol architecture. Before the remote UE performs initial access, in this embodiment of this application, a procedure in which the relay UE sets up a Uu RLC bearer for SRB signaling of the remote UE and the base station allocates the local ID to the remote UE and a procedure in which the DU or the CU determines the adaptation layer configuration are further introduced. Further, in this embodiment of this application, when the adaptation layer is placed in the gNB-DU, an initial access procedure of the remote UE is designed, so that the remote UE can successfully access the base station, and set up the UE context.

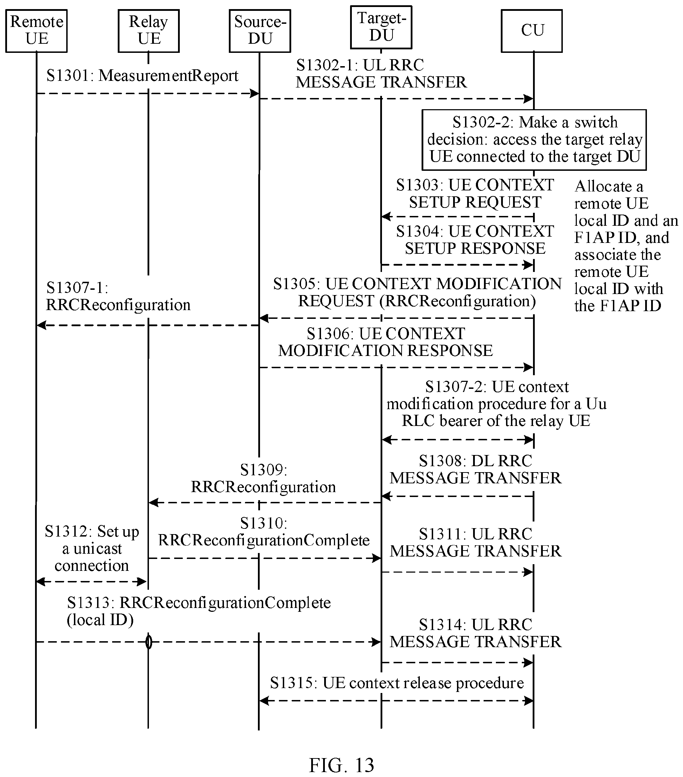

With reference to the foregoing embodiments, FIG. 12 is a schematic diagram of another communication method according to an embodiment of this application. In the method, when a Uu adaptation layer is disposed in a gNB-DU, an inter-DU switch procedure of a remote UE is proposed. To be specific, the remote UE is switched from a source DU (Source DU) to a relay UE of a target DU (Target DU), and a same CU controls the source DU and the target DU. Specifically, the method shown in FIG. 13 includes the following steps.

S1301: The remote UE sends a measurement report MeasurementReport to the source DU.

The remote UE performs measurement reporting, and sends the MeasurementReport message to the source DU. Measurement report content includes an ID of the relay UE and cell ID information.

S1302-1: The source DU sends a UL RRC MESSAGE TRANSFER message to the CU.

The source DU sends the MeasurementReport message to the CU via the F1 interface signaling UL RRC MESSAGE TRANSFER.

S1302-2: Make a switch decision.

The CU may determine, based on the measurement report content of the remote UE, to switch the remote UE to the relay UE connected to the target DU (Target DU).

S1303: The CU sends a UE CONTEXT SETUP REQUEST message to the target DU.

The CU sends the UE CONTEXT SETUP REQUEST to the target DU, to indicate the target DU to set up a UE context of the remote UE.

S1304: The target DU replies to the CU with a UE CONTEXT SETUP RESPONSE message, where the UE CONTEXT SETUP RESPONSE message may indicate that the UE context is successfully set up in the gNB-DU.

Step S1303 and step S1304 relate to the F1 interface signaling related to the remote UE. Therefore, in a process in which the gNB-CU and the gNB-DU send signaling, the gNB-CU and the gNB-DU respectively allocate a CU F1AP ID and a DU F1AP ID to the remote UE, and carry the allocated F1AP IDs of the remote UE in the signaling. In addition, in this process, the DU or the CU may also allocate a remote UE local ID, and associate the local ID with the F1AP ID. If the CU allocates the local ID, the CU sends, to the DU via the UE CONTEXT SETUP REQUEST message in step S1303, the local ID allocated by the CU. If the DU allocates the local ID, the CU requests, by using the UE CONTEXT SETUP REQUEST message in step S1303, the DU to allocate the local ID, and then the DU sends the allocated local ID to the CU via the UE CONTEXT SETUP RESPONSE message in step S1304. Alternatively, the DU may autonomously decide, based on internal implementation, to allocate the local ID, and send the allocated local ID to the CU via the UE CONTEXT SETUP RESPONSE message in step S1304. That is, the UE CONTEXT SETUP RESPONSE message in step S1304 does not need to carry indication information for requesting the UD to allocate the local ID.

In step S1303 and step S1304, an adaptation layer configuration of the remote UE and an adaptation layer configuration of the relay UE may be further generated, and there are two solutions: The DU generates the configurations; and the CU generates the configurations. For specific different configuration processes, refer to the embodiment shown in FIG. 12 (for example, the various configuration manners proposed in S1209). In another possible implementation, in step S1303 and step S1304, only an adaptation layer configuration of the remote UE may be generated, and an adaptation layer configuration of the relay UE is generated by using a UE context modification process of the relay UE shown in step S1307-2. This is similar to step Sb1 and step Sb2 in the embodiment shown in FIG. 12. Details are not described herein again.

S1305: The CU sends a UE CONTEXT MODIFICATION REQUEST message to the source DU, where the UE CONTEXT MODIFICATION REQUEST message includes an RRCReconfiguration message sent by the CU to the remote UE. For example, in addition to configuration information included in a conventional technology, the RRCReconfiguration message may further include adaptation layer configuration information of the remote UE (for example, DRB ID information of the remote UE, PC5 RLC bearer information, and a mapping relationship between the DRB ID information of the remote UE and the PC5 RLC bearer information) and the local ID allocated to the remote UE.

S1306: The source DU replies to the CU with a UE CONTEXT MODIFICATION RESPONSE message.

S1307-1: The source DU delivers, to the remote UE, the RRCReconfiguration message generated by the CU.

S1307-2: Optionally, the CU and the target DU may generate a Uu RLC configuration of the relay UE by using a UE context modification procedure of the relay UE, where the Uu RLC configuration includes the adaptation layer configuration (that is, a mapping relationship between the remote UE local ID, a DRB ID, Uu RLC, and a PC5 RLC bearer) of the relay UE and a needed RLC bearer configuration.

S1308: The CU sends a DL RRC MESSAGE TRANSFER message to the target DU.

The CU generates an RRCReconfiguration message that carries configuration information of the relay UE, and sends the RRCReconfiguration message to the target DU via the DL RRC MESSAGE TRANSFER message.

S1309: The target DU sends the RRCReconfiguration message to the relay UE.

S1310: The relay UE replies to the target DU with an RRCReconfigurationComplete message.

S1311: The target DU forwards the RRC message of the relay UE to the CU via a UL RRC MESSAGE TRANSFER message.

S1312: Set up a unicast connection.

If there has been no unicast connection between the remote UE and the relay UE before, the remote UE further needs to set up the unicast connection to the relay UE first, and the relay UE matches, by using the local ID, the connected remote UE with a configuration delivered by a base station.

S1313: The remote UE forwards an RRCReconfigurationComplete message to the target DU via the relay UE.

The remote UE sends the RRCReconfigurationComplete message on the unicast connection via the relay UE. The relay UE identifies the remote UE, and in a forwarding process, adds the local ID to an adaptation layer PDU that carries the RRCReconfigurationComplete message, so that an adaptation layer of the target DU can identify that the message belongs to the remote UE, and correctly forward the message.

S1314. The target DU sends a UL RRC MESSAGE TRANSFER message to the CU.

The target DU sends the RRCReconfigurationComplete message of the remote UE to the CU via the UL RRC MESSAGE TRANSFER message.

S1315: The CU indicates the source DU to release the UE context of the remote UE.

According to the method in this embodiment, the inter-DU switch procedure of the remote UE when the adaptation layer is placed in the DU in a CU-DU separation architecture is proposed, so that the remote UE can successfully access the relay UE connected to the target DU. In comparison with an existing inter-DU switch procedure performed by the remote UE, in this embodiment, the UE context of the remote UE needs to be set up, and related configuration of the relay UE further needs to be performed. In addition, the base station needs to allocate the local ID in a UE context setup process, and associate the local ID with the F1AP ID of the remote UE, so that a remote UE that forwards the RRC message via the relay UE can be identified in a subsequent procedure.

An embodiment of this application further provides a communication method. A UE context release procedure of a remote UE is provided. When the remote UE enters an RRC idle/inactive state, or the remote UE leaves a relay UE, the base station needs to release a UE context of the remote UE. In addition, a UE context of the connected relay UE may further need to be updated/released. The following steps are specifically included.

Step 1: A CU sends UE CONTEXT RELEASE COMMAND information to a DU, to indicate the DU to release UE context information of the remote UE. In addition, the message carries an RRCRelease message delivered to the UE.

Step 2: The DU sends, to the remote UE, the RRCRelease message generated by the CU, to indicate the remote UE to release an RRC connection.

Step 3: The DU replies to the CU with UE CONTEXT RELEASE COMPLETE information, to confirm that the UE context of the remote UE is successfully released.

Different from a conventional technology, when the remote UE is released, release or modification of the UE context of the relay UE further needs to be considered. After the context of the remote UE is released, the DU is to further determine whether a Uu RLC bearer of the relay UE needs to be released or whether the relay UE needs to be released. For example, as the remote UE is released, the Uu RLC bearer does not need to carry data, and the corresponding Uu RLC bearer may be released; or after the remote UE is released, the relay UE may be released because the relay UE has neither relay data nor data of the relay UE.

If the DU determines to release the Uu RLC bearer, a procedure in step 4a to step 6a is performed. If the DU determines to release the relay UE, a procedure in step 4b to step 6b is performed.

Step 4a: After determining that the Uu RLC bearer may be released, the DU sends a UE CONTEXT MODIFICATION REQUIRED message to the CU, to indicate ID information of the Uu RLC bearer to be released.

Step 5a: The CU replies to the DU with a UE CONTEXT MODIFICATION CONFIRM message that carries a generated RRCReconfiguration message, where the RRCReconfiguration message includes configuration information of an updated relay UE.

Step 6a: The DU sends the RRCReconfiguration message to the relay UE.

Step 4b: After determining that the relay UE may be released, the DU sends a UE CONTEXT RELEASE REQUEST message to the CU, to indicate to release the relay UE.

Step 5b: The CU generates an RRCRelease message of the relay UE, and sends the RRCRelease message to the DU via a DL RRC MESSAGE TRANSFER message.

Step 6b: The DU sends the RRCRelease message to the relay UE, to indicate the relay UE to release an RRC connection to the base station.

In conclusion, compared with an existing UE context release procedure, in the method provided in this embodiment, after the context of the remote UE is released, the DU further needs to determine whether the context of the relay UE needs to be updated or released. After determining of the DU, a context update or release procedure of the relay UE is correspondingly performed.

An embodiment of this application further provides a communication method. An initial access procedure of a remote UE when a Uu adaptation layer is placed in a CU is provided. Similarly, when the Uu adaptation layer is placed in the CU, before the initial access procedure starts, the following is further needed: 1. An RLC bearer for carrying SRB signaling of the remote UE is set up between a relay UE and a DU. 2. A base station allocates a local ID to the remote UE, and notifies the relay UE of the local ID. The method includes the following steps.

Step 1: Signaling exchanged between the DU and the CU is F1 interface signaling related to the relay UE. That is, signaling of the remote UE is carried in signaling of the relay UE in a form of a container. Because there is no adaptation layer on the DU, the DU cannot identify whether data/signaling uploaded by the relay UE is data/the signaling of the remote UE. The base station can identify, based on the local ID identity on an adaptation layer header only when the data/signaling is delivered to an adaptation layer of the CU, that the data/signaling belongs to the remote UE, and deliver the data/signaling to an upper protocol layer of the remote UE.

Step 2: The CU generates an adaptation layer configuration. The adaptation layer is located on the CU. Therefore, a natural manner is that the CU determines a mapping relationship configuration of the adaptation layer, and requests the DU to set up a corresponding Uu RLC bearer.

Step 3: On a data plane, data on different bearers may be multiplexed on an F1 interface tunnel. An F1 interface connects the adaptation layer of the CU and an RLC layer of the DU. The adaptation layer is for multiplexing data on different bearers. In an uplink direction, the RLC layer directly delivers data multiplexed onto the Uu RLC bearer to the adaptation layer through a tunnel. A case in a downlink direction is similar thereto. Particularly, the tunnel should be an F1-U GTP tunnel configured by the CU and the DU for the relay UE. Therefore, in a context setup process, when configuring an uplink tunnel, the CU needs to configure a mapping relationship between an adaptation layer entity and a tunnel address; and when configuring a downlink tunnel, the DU needs to configure a correspondence between an ID of the Uu RLC bearer and a tunnel address.

In the method, to support L2 U2N relay in a CU-DU separation architecture, the adaptation layer is introduced into the CU to support an L2 U2N relay protocol architecture. In comparison with the embodiment shown in FIG. 12, because the DU cannot identify the data of the remote UE, in this solution: 1. The signaling of the remote UE is exchanged between the DU and the CU via the F1 interface signaling of the relay UE. 2. The data of the remote UE is exchanged between the DU and the CU through the F1 interface tunnel of the relay UE. It can be identified, only when the data or the signaling is delivered to the adaptation layer of the CU, that the data or the signaling belongs to the remote UE. In addition, in a conventional technology, data on one bearer corresponds to one F1 interface tunnel. In this solution, the data on the different bearers may be multiplexed onto the F1 interface tunnel.

It should be noted that, in the foregoing method embodiments, the processor 801 in the communication apparatus 80 shown in FIG. 8 may invoke the application program code stored in the memory 802, to indicate the first terminal device to perform an action of the first network node CU or the second network node DU. This is not limited in embodiments.

It may be understood that, in the foregoing embodiments, the method and/or the step implemented by the first network node CU may alternatively be implemented by a component (for example, a chip or a circuit) that may be used in the first network node CU. The method and/or step implemented by the second network node DU may alternatively be implemented by a component (for example, a chip or a circuit) that may be used in the second network node DU.

From a perspective of interaction between devices, the foregoing mainly describes the solutions provided in embodiments of this application. Correspondingly, embodiments of this application further provide a communication apparatus, and the communication apparatus is configured to implement the foregoing various methods. The communication apparatus may be the first network node CU in the foregoing method embodiment, an apparatus including the foregoing first network node CU, or a component or a computer program that may be used in the first network node CU. Alternatively, the communication apparatus may be the second network node DU in the foregoing method embodiment, an apparatus including the foregoing second network node DU, or a component or a computer program that may be used in the second network node DU. It may be understood that, to implement the foregoing functions, the communication apparatus includes a corresponding hardware structure and/or software module for performing the functions. A person skilled in the art should be easily aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the functions for each particular application, but it should not be considered that the implementation goes beyond the scope of this application.

In embodiments of this application, the communication apparatus may be divided into function modules according to the foregoing method embodiments. For example, each function module may be obtained through division based on each corresponding function, or two or more functions may be integrated into one processing module. The integrated module may be implemented in a form of hardware, or may be implemented in a form of a software function module. It should be noted that, in embodiments of this application, division into the modules is an example, and is merely logical function division. Another division manner may be used during actual implementation.

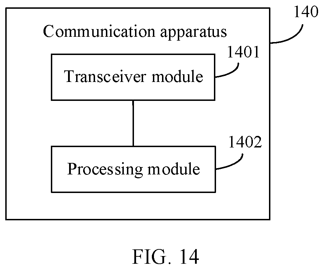

FIG. 14 is a schematic diagram of a structure of a communication apparatus 140. The communication apparatus 140 includes a transceiver module 1401 and a processing module 1402. The transceiver module 1401 may also be referred to as a transceiver unit, and is configured to implement a transceiver function. For example, the transceiver module 1401 may be a transceiver circuit, a transceiver, or a communication interface. It should be noted that all related content of the steps in the foregoing method embodiments may be cited in function descriptions of corresponding function modules. Details are not described herein again.

In this embodiment, the communication apparatus 140 is presented in a form of function modules obtained through division in an integrated manner. The "module" herein may be a specified ASIC, a circuit, a processor and a memory that execute one or more software or firmware programs, an integrated logic circuit, and/or another component that can provide the foregoing functions. In a simple embodiment, a person skilled in the art may figure out that the communication apparatus 140 may be in the form of the communication apparatus 80 shown in FIG. 8.

For example, the processor 801 in the communication apparatus 80 shown in FIG. 8 may invoke the computer-executable instructions stored in the memory 803, to enable the communication apparatus 80 to perform the communication methods in the foregoing method embodiments.

Specifically, functions/implementation processes of the transceiver module 1401 and the processing module 1402 in FIG. 14 may be implemented by the processor 801 in the communication apparatus 80 shown in FIG. 8 by invoking the computer-executable instructions stored in the memory 803. Alternatively, a function/an implementation process of the processing module 1402 in FIG. 14 may be implemented by the processor 801 in the communication apparatus 80 shown in FIG. 8 by invoking the computer-executable instructions stored in the memory 803, and a function/an implementation process of the transceiver module 1401 in FIG. 14 may be implemented through the communication interface 804 in the communication apparatus 80 shown in FIG. 8.

The communication apparatus 140 provided in this embodiment may perform the foregoing communication methods. Therefore, for technical effects that can be obtained by the communication apparatus 140, refer to the foregoing method embodiments. Details are not described herein again.

It should be understood that, in various embodiments of this application, sequence numbers of the foregoing processes do not mean an execution sequence. The execution sequence of the processes should be determined based on functions and internal logic of the processes, and should not constitute any limitation on an implementation process of embodiments of this application.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, device, and method may be implemented in other manners. For example, the foregoing device embodiments are merely examples. For example, division into the units is merely logical function division. During actual implementation, another division manner may be used. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the devices or units may be implemented in electrical, mechanical, or other forms.

The units described as separate parts may or may not be physically separate, and parts displayed as units may or may not be physical units, that is, may be located in one location, or may be distributed on a plurality of network units. Some or all of the units may be selected based on actual requirements to achieve the objectives of the solutions in embodiments.

In addition, functional units in embodiments of this application may be integrated into one processing unit, each of the units may exist alone physically, or two or more units may be integrated into one unit.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive, SSD)), or the like.

Terms such as "component", "module", and "system" used in this application indicate computer-related entities. The computer-related entities may be hardware, firmware, combinations of hardware and software, software, or software in running. For example, a component may be but is not limited to a process that runs on a processor, a processor, an object, an executable file, a thread of execution, a program, and/or a computer. In an example, both a computing device and an application that runs on the computing device may be components. One or more components may reside within a process and/or a thread of execution, and a component may be located on one computer and/or distributed between two or more computers. In addition, these components may be executed from various computer-readable media that have various data structures. These components may communicate by using a local and/or remote process and based on, for example, a signal having one or more data packets (for example, data from one component, where the component interacts with another component in a local system or a distributed system, and/or interacts with another system via a network such as the Internet by using a signal).

This application presents aspects, embodiments, or features around a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of the solutions may be further used.

In addition, the word "example" in embodiments of this application is for representing giving an example, an illustration, or a description. Any embodiment or design scheme described as "example" in this application should not be explained as being more preferred or having more advantages than another embodiment or design scheme. Exactly, the term "example" is used to present a concept in a specific manner.

In embodiments of this application, information (information), a signal (signal), a message (message), or a channel (channel) may be interchangeably used sometimes. It should be noted that meanings expressed by the terms are consistent when differences between the terms are not emphasized. "Of (of)", "corresponding, relevant (corresponding, relevant)", and "corresponding (corresponding)" may be interchangeably used sometimes. It should be noted that meanings expressed by the terms are consistent when differences between the terms are not emphasized. "System" and "network" may be interchangeably used sometimes. Meanings expressed by the terms are consistent when differences between the terms are not emphasized. For example, "communication network" also refers to "communication system".

The network architecture and the service scenario in embodiments of this application are intended to describe the technical solutions in embodiments of this application more clearly, and do not constitute a limitation on the technical solutions provided in embodiments of this application. A person of ordinary skill in the art may know that with evolution of the network architecture and emergence of new service scenarios, the technical solutions provided in embodiments of this application are also applicable to similar technical problems.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a first network node, wherein the method comprises:
sending, by the first network node, first information to a second network node, wherein the first information is for triggering the second network node to allocate a local identity to a remote terminal device; and receiving, by the first network node, second information from the second network node, wherein the second information comprises the local identity allocated by the second network node to the remote terminal device; or
sending, by the first network node, first information to a second network node, wherein the first information comprises a local identity allocated by the first network node to a remote terminal device, wherein
the first network node or the second network node communicates with the remote terminal device via a relay terminal device.

2. The method according to claim 1, wherein the method further comprises:
receiving, by the first network node, third information sent by the second network node, wherein
the third information comprises identity information that is of the remote terminal device on a first interface and that is allocated by the second network node to the remote terminal device; or
the third information comprises identity information that is of the remote terminal device on a first interface and that is allocated by the second network node to the remote terminal device and identity information that is of the relay terminal device on the first interface and that is allocated by the second network node to the relay terminal device, wherein
the first interface is a communication interface between the first network node and the second network node.

3. The method according to claim 1 or 2, wherein the method further comprises any one of the following operations:
an operation 1:
sending, by the first network node, fourth information to the second network node, wherein the fourth information comprises data radio bearer identity DRB ID information of the remote terminal device and identity information of a first radio link control RLC bearer, and there is a correspondence between the DRB ID information of the remote terminal device and the identity information of the first RLC bearer; and
receiving, by the first network node, fifth information sent by the second network node, wherein the fifth information comprises configuration information that is of the first RLC bearer and that is generated by the second network node, wherein
the first RLC bearer is a bearer between the remote terminal device and the relay terminal device, and there is a correspondence between the DRB ID information of the remote terminal device and the identity information of the first RLC bearer;
an operation 2:
receiving, by the first network node, fifth information generated by the second network node, wherein the fifth information comprises data radio bearer identity DRB ID information of the remote terminal device, identity information of a first RLC bearer, and configuration information of the first RLC bearer, the first RLC bearer is a bearer between the remote terminal device and the relay terminal device, and there is a correspondence between the DRB ID information of the remote terminal device and the identity information of the first RLC bearer;
an operation 3:
sending, by the first network node, fourth information to the second network node, wherein the fourth information comprises data radio bearer identity DRB ID information of the remote terminal device, the local identity of the remote terminal device, and identity information of a second RLC bearer; and
receiving, by the first network node, fifth information generated by the second network node, wherein the fifth information comprises configuration information of the second RLC bearer, wherein
the second RLC bearer is a bearer between the second network node and the relay terminal device, and there is a correspondence between the DRB ID information of the remote terminal device, the local identity of the remote terminal device, and the identity information of the second RLC bearer; or
an operation 4:
receiving, by the first network node, fifth information generated by the second network node, wherein the fifth information comprises at least one of the following: data radio bearer identity DRB ID information of the remote terminal device, the local identity of the remote terminal device, identity information of a second RLC bearer, and configuration information of the second RLC bearer, wherein
the second RLC bearer is a bearer between the second network node and the relay terminal device, and there is a correspondence between the DRB ID information of the remote terminal device, the local identity of the remote terminal device, and the identity information of the second RLC bearer.

4. The method according to claim 3, wherein in the operation 2 or the operation 4, the method further comprises:
sending, by the first network node, fourth information to the second network node, wherein the fourth information comprises identity information of the remote device.

5. The method according to claim 3 or 4, wherein any one of the following is satisfied:
the fourth information further comprises identity information of an uplink transmission tunnel, and there is a correspondence between the identity information of the uplink transmission tunnel and at least one of the following: the DRB ID information of the remote terminal device, the local identity of the remote terminal device, the identity information of the remote terminal device, and the identity information of the second RLC bearer, wherein the uplink transmission tunnel is used by the first network node to receive data from the second network node on the first interface; and/or
the fifth information further comprises identity information of a downlink transmission tunnel, and there is a correspondence between the identity information of the downlink transmission tunnel and at least one of the following: the DRB ID information of the remote terminal device, the local identity of the remote terminal device, the identity information of the remote terminal device, and the identity information of the second RLC bearer, wherein the downlink transmission tunnel is used by the first network node to send data to the second network node on the first interface.

6. The method according to any one of claims 1 to 5, wherein the method further comprises:
receiving, by the first network node, first indication information from the relay terminal device, wherein the first indication information comprises the identity information of the remote terminal device; the first indication information is for requesting to allocate the local identity to the remote terminal device; and the local identity of the remote terminal device uniquely identifies the remote terminal device within a control range of the first network node, or the local identity of the remote terminal device uniquely identifies the remote terminal device within a control range of the relay terminal device.

7. The method according to any one of claims 1 to 6, wherein any one of the following is satisfied:
the first information is a user equipment context modification request UE CONTEXT MODIFICATION REQUEST message of the relay terminal device, and the second information is a user equipment context modification response UE CONTEXT MODIFICATION RESPONSE message of the relay terminal device;
the fourth information is a user equipment context setup request UE CONTEXT SETUP REQUEST message of the remote terminal device, and the fifth information is a user equipment context setup response UE CONTEXT SETUP RESPONSE message of the remote terminal device; or
the third information is an initial uplink RRC message transfer Initial UL RRC Message Transfer message of the remote terminal device.

8. The method according to any one of claims 1 to 7, wherein
the first network node comprises a radio resource control RRC protocol layer, a service data adaptation protocol SDAP protocol layer, and a packet data convergence protocol PDCP protocol layer;
the second network node comprises a radio link control RLC protocol layer, a media access control MAC protocol layer, and a physical PHY protocol layer; and
the first network node and the second network node are comprised in one base station.

9. The method according to any one of claims 1, 3 to 6, and 8, wherein in a process in which the remote terminal device is switched from a third network node to the second network node, the second network node is a target node in the switch process, the third network node is a source node in the switch process, the first network node controls the second network node and the third network node, and any one of the following is satisfied:
the first information is a user equipment context setup request UE CONTEXT SETUP REQUEST message of the remote terminal device, and the second information is a user equipment context setup response UE CONTEXT SETUP RESPONSE message of the remote terminal device; or
the fourth information is a user equipment context setup request UE CONTEXT SETUP REQUEST message of the remote terminal device, and the fifth information is a user equipment context setup response UE CONTEXT SETUP RESPONSE message of the remote terminal device.

10. The method according to claim 9, wherein the third network node comprises a radio link control RLC protocol layer, a media access control MAC protocol layer, and a physical PHY protocol layer, and the first network node, the second network node, and the third network node are comprised in one base station.

11. The method according to any one of claims 3 to 10, wherein the fourth information or the fifth information further comprises a first identity, and the first identity indicates the relay terminal device corresponding to the first RLC bearer.

12. The method according to claim 11, wherein the first identity is an identity of the relay terminal, a serving cell identity of the relay terminal, an identity allocated by the first network node to the relay terminal, or an identity allocated by the second network node to the relay terminal.

13. A communication method, applied to a second network node, wherein the method comprises:
receiving, by the second network node, first information from a first network node, wherein the first information is for triggering the second network node to allocate a local identity to a remote terminal device; and sending, by the second network node, second information to the first network node, wherein the second information comprises the local identity allocated by the second network node to the remote terminal device; or
receiving, by the second network node, first information from a first network node, wherein the first information comprises a local identity allocated by the first network node to a remote terminal device, wherein
the first network node or the second network node communicates with the remote terminal device via a relay terminal device.

14. The method according to claim 13, wherein the method further comprises:
sending, by the second network node, third information to the first network node, wherein
the third information comprises identity information that is of the remote terminal device on a first interface and that is allocated by the second network node to the remote terminal device; or
the third information comprises identity information that is of the remote terminal device on a first interface and that is allocated by the second network node to the remote terminal device and identity information that is of the relay terminal device on the first interface and that is allocated by the second network node to the relay terminal device, wherein
the first interface is a communication interface between the second network node and the first network node.

15. The method according to claim 113 or 14, wherein the method further comprises any one of the following operations:
an operation 1:
receiving, by the second network node, fourth information sent by the first network node, wherein the fourth information comprises data radio bearer identity DRB ID information of the remote terminal device and identity information of a first radio link control RLC bearer, and there is a correspondence between the DRB ID information of the remote terminal device and the identity information of the first RLC bearer; and
sending, by the second network node, fifth information to the first network node, wherein the fifth information comprises configuration information that is of the first RLC bearer and that is generated by the second network node, wherein
the first RLC bearer is a bearer between the remote terminal device and the relay terminal device, and there is a correspondence between the DRB ID information of the remote terminal device and the identity information of the first RLC bearer;
an operation 2:
sending, by the second network node, fifth information to the first network node, wherein the fifth information comprises data radio bearer identity DRB ID information of the remote terminal device, identity information of a first RLC bearer, and configuration information of the first RLC bearer, the first RLC bearer is a bearer between the remote terminal device and the relay terminal device, and there is a correspondence between the DRB ID information of the remote terminal device and the identity information of the first RLC bearer;
an operation 3:
receiving, by the second network node, fourth information sent by the first network node, wherein the fourth information comprises data radio bearer identity DRB ID information of the remote terminal device, the local identity of the remote terminal device, and identity information of a second RLC bearer; and
sending, by the second network node, fifth information to the first network node, wherein the fifth information comprises configuration information of the second RLC bearer, wherein
the second RLC bearer is a bearer between the second network node and the relay terminal device, and there is a correspondence between the DRB ID information of the remote terminal device, the local identity of the remote terminal device, and the identity information of the second RLC bearer; or
an operation 4:
sending, by the second network node, fifth information to the first network node, wherein the fifth information comprises data radio bearer identity DRB ID information of the remote terminal device, the local identity of the remote terminal device, and identity information of a second RLC bearer, wherein
the second RLC bearer is a bearer between the second network node and the relay terminal device, and there is a correspondence between the DRB ID information of the remote terminal device, the local identity of the remote terminal device, and the identity information of the second RLC bearer.

16. The method according to claim 15, wherein in the operation 2 or the operation 4, the method further comprises:
receiving, by the second network node, fourth information sent by the first network node, wherein the fourth information comprises identity information of the remote device.

17. The method according to claim 15 or 16, wherein any one of the following is satisfied:
the fourth information further comprises identity information of an uplink transmission tunnel, and there is a correspondence between the identity information of the uplink transmission tunnel and at least one of the following: the DRB ID information of the remote terminal device, the local identity of the remote terminal device, the identity information of the remote terminal device, and the identity information of the second RLC bearer, wherein the uplink transmission tunnel is used by the first network node to receive data from the second network node on the first interface; and/or
the fifth information further comprises identity information of a downlink transmission tunnel, and there is a correspondence between the identity information of the downlink transmission tunnel and at least one of the following: the DRB ID information of the remote terminal device, the local identity of the remote terminal device, the identity information of the remote terminal device, and the identity information of the second RLC bearer, wherein the downlink transmission tunnel is used by the first network node to send data to the second network node on the first interface.

18. The method according to any one of claims 13 to 17, wherein any one of the following is satisfied:
the first information is a user equipment context modification request UE CONTEXT MODIFICATION REQUEST message of the relay terminal device, and the second information is a user equipment context modification response UE CONTEXT MODIFICATION RESPONSE message of the relay terminal device;
the fourth information is a user equipment context setup request UE CONTEXT SETUP REQUEST message of the remote terminal device, and the fifth information is a user equipment context setup response UE CONTEXT SETUP RESPONSE message of the remote terminal device; or
the third information is an initial uplink RRC message transfer Initial UL RRC Message Transfer message of the remote terminal device.

19. The method according to any one of claims 13 to 18, wherein
the first network node comprises a radio resource control RRC protocol layer, a service data adaptation protocol SDAP protocol layer, and a packet data convergence protocol PDCP protocol layer;
the second network node comprises a radio link control RLC protocol layer, a media access control MAC protocol layer, and a physical PHY protocol layer; and
the first network node and the second network node are comprised in one base station.

20. The method according to any one of claims 13, 15 to 17, and 19, wherein in a process in which the remote terminal device is switched from a third network node to the second network node, the second network node is a target node in the switch process, the third network node is a source node in the switch process, the first network node controls the second network node and the third network node, and any one of the following is satisfied:
the first information is a user equipment context setup request UE CONTEXT SETUP REQUEST message of the remote terminal device, and the second information is a user equipment context setup response UE CONTEXT SETUP RESPONSE message of the remote terminal device; or
the fourth information is a user equipment context setup request UE CONTEXT SETUP REQUEST message of the remote terminal device, and the fifth information is a user equipment context setup response UE CONTEXT SETUP RESPONSE message of the remote terminal device.

21. The method according to claim 20, wherein the third network node comprises a radio link control RLC protocol layer, a media access control MAC protocol layer, and a physical PHY protocol layer, and the first network node, the second network node, and the third network node are comprised in one base station.

22. The method according to any one of claims 15 to 21, wherein the fourth information or the fifth information further comprises a first identity, and the first identity indicates the relay terminal device corresponding to the first RLC bearer.

23. The method according to claim 22, wherein the first identity is an identity of the relay terminal, a serving cell identity of the relay terminal, an identity allocated by the first network node to the relay terminal, or an identity allocated by the second network node to the relay terminal.

24. A communication method, applied to a first network node, wherein the method comprises:
sending, by the first network node, sixth information to a second network node, wherein the sixth information comprises second indication information, the second indication information indicates the second network node to set up a second radio link control RLC bearer between the second network node and a relay terminal device, the second RLC bearer is for carrying first data, and the first data is data exchanged between a remote terminal device and the second network node or the first network node; and
receiving, by the first network node, seventh information sent by the second network node, wherein the seventh information comprises configuration information of the second RLC bearer.

25. The method according to claim 24, wherein
the second indication information comprises information about a signaling radio bearer SRB that needs to be set up for the remote device; or
the second indication information comprises relay service authorization information of the relay terminal device.

26. The method according to claim 24 or 25, wherein the first data is data carried on a signaling radio bearer SRB0, a signaling radio bearer SRB1, or a signaling radio bearer SRB2 of the remote terminal device.

27. The method according to any one of claims 24 to 26, wherein
the sixth information is a user equipment context setup request UE CONTEXT SETUP REQUEST message, and the seventh information is a user equipment context setup response UE CONTEXT SETUP RESPONSE message; or
the sixth information is a user equipment context setup request UE CONTEXT MODIFICATION REQUEST message, and the seventh information is a user equipment context setup response UE CONTEXT MODIFICATION RESPONSE message.

28. The method according to any one of claims 24 to 27, wherein
the first network node comprises a radio resource control RRC protocol layer, a service data adaptation protocol SDAP protocol layer, and a packet data convergence protocol PDCP protocol layer;
the second network node comprises a radio link control RLC protocol layer, a media access control MAC protocol layer, and a physical PHY protocol layer; and
the first network node and the second network node are comprised in one base station.

29. A communication method, applied to a second network node, wherein the method comprises:
receiving, by the second network node, sixth information sent by a first network node, wherein the sixth information comprises second indication information, the second indication information indicates the second network node to set up a second radio link control RLC bearer between the second network node and a relay terminal device, the second RLC bearer is for carrying first data, and the first data is data exchanged between a remote terminal device and the second network node or the first network node; and
sending, by the second network node, seventh information to the first network node DU, wherein the seventh information comprises configuration information of the second RLC bearer.

30. The method according to claim 29, wherein
the second indication information comprises information about a signaling radio bearer SRB that needs to be set up for the remote device; or
the second indication information comprises relay service authorization information of the relay terminal device.

31. The method according to claim 29 or 30, wherein the first data is data carried on a signaling radio bearer SRB0, a signaling radio bearer SRB1, or a signaling radio bearer SRB2 of the remote terminal device.

32. The method according to any one of claims 29 to 31, wherein
the sixth information is a user equipment context setup request UE CONTEXT SETUP REQUEST message, and the seventh information is a user equipment context setup response UE CONTEXT SETUP RESPONSE message; or
the sixth information is a user equipment context setup request UE CONTEXT MODIFICATION REQUEST message, and the seventh information is a user equipment context setup response UE CONTEXT MODIFICATION RESPONSE message.

33. The method according to any one of claims 29 to 32, wherein
the first network node comprises a radio resource control RRC protocol layer, a service data adaptation protocol SDAP protocol layer, and a packet data convergence protocol PDCP protocol layer;
the second network node comprises a radio link control RLC protocol layer, a media access control MAC protocol layer, and a physical PHY protocol layer; and
the first network node and the second network node are comprised in one base station.

34. A first network node, wherein the first network node comprises a processor and a memory, wherein
the memory is configured to store computer-executable instructions; and when the processor executes the computer-executable instructions, the communication apparatus is enabled to perform the method according to any one of claims 1 to 12 and 24 to 28.

35. A second network node, wherein the second network node comprises a processor and a memory, wherein
the memory is configured to store computer-executable instructions; and when the processor executes the computer-executable instructions, the communication apparatus is enabled to perform the method according to any one of claims 13 to 23 and 29 to 33.

36. A network node, comprising a module configured to perform the method according to any one of claims 1 to 12 and 24 to 28, or comprising a module configured to perform the method according to any one of claims 13 to 23 and 29 to 33.

37. A communication apparatus, wherein the communication apparatus comprises a processor and an interface circuit, wherein
the interface circuit is configured to receive computer-executable instructions, and transmit the computer-executable instructions to the processor; and
the processor is configured to execute the computer-executable instructions, to enable the communication apparatus to perform the method according to any one of claims 1 to 33.

38. A computer-readable storage medium, wherein the computer-readable storage medium stores a computer program; and when the computer program is executed by a computer, the computer is enabled to perform the method according to any one of claims 1 to 33.

39. A radio access network device, comprising the first network node according to claim 34 and the second network node according to claim 35.
